# EUROPEAN PATENT SPECIFICATION

(11) **EP 4 559 254 B1**
(45) Date of publication and mention of the grant of the patent: **17.06.2026**
(21) Application number: 23733814.0
(22) Date of filing: 25.05.2023
(51) Int. Cl.: H04W 64/00, G01S 1/04, G01S 5/00, G01S 5/02, H04L 5/00, H04W 76/28, H04W 92/18

(54) **SIDELINK POSITIONING RESOURCE SELECTION AND RESELECTION BASED ON SIDELINK DISCONTINUOUS RECEPTION (SL-DRX) CONFIGURATION**
AUSWAHL UND NEUAUSWAHL VON SIDELINK-POSITIONIERUNGSRESSOURCEN AUF BASIS EINER KONFIGURATION FÜR DISKONTINUIERLICHEN SIDELINK-EMPFANG (SL-DRX)
SÉLECTION ET RESÉLECTION DE RESSOURCES DE POSITIONNEMENT DE LIAISON LATÉRALE SUR LA BASE D'UNE CONFIGURATION DE RÉCEPTION DISCONTINUE DE LIAISON LATÉRALE (DRX-SL)

(30) Priority: 19.07.2022 GR 20220100569
(43) Date of publication of application: 28.05.2025
(73) Proprietor: QUALCOMM INCORPORATED, San Diego, California 92121-1714 (US)
(72) Inventor: MANOLAKOS, Alexandros, San Diego, California 92121-1714 (US); KUMAR, Mukesh, San Diego, California 92121-1714 (US); YERRAMALLI, Srinivas, San Diego, California 92121-1714 (US)
(74) Representative: Reddie & Grose LLP
(86) International application number: PCT/US2023/023470
(87) International publication number: WO 2024/019813

(56) References cited:
- WO-A1-2022/045798
- US-A1- 2021 410 098

## Description

### BACKGROUND OF THE DISCLOSURE

### 1. Field of the Disclosure

Aspects of the disclosure relate generally to wireless communications.

### 2. Description of the Related Art

Wireless communication systems have developed through various generations, including a first-generation analog wireless phone service (1G), a second-generation (2G) digital wireless phone service (including interim 2.5G and 2.75G networks), a third-generation (3G) high speed data, Internet-capable wireless service and a fourth-generation (4G) service (e.g., Long Term Evolution (LTE) or WiMax). There are presently many different types of wireless communication systems in use, including cellular and personal communications service (PCS) systems. Examples of known cellular systems include the cellular analog advanced mobile phone system (AMPS), and digital cellular systems based on code division multiple access (CDMA), frequency division multiple access (FDMA), time division multiple access (TDMA), the Global System for Mobile communications (GSM), etc.

A fifth generation (5G) wireless standard, referred to as New Radio (NR), enables higher data transfer speeds, greater numbers of connections, and better coverage, among other improvements. The 5G standard, according to the Next Generation Mobile Networks Alliance, is designed to provide higher data rates as compared to previous standards, more accurate positioning (e.g., based on reference signals for positioning (RS-P), such as downlink, uplink, or sidelink positioning reference signals (PRS)) and other technical enhancements.

Leveraging the increased data rates and decreased latency of 5G, among other things, vehicle-to-everything (V2X) communication technologies are being implemented to support autonomous driving applications, such as wireless communications between vehicles, between vehicles and the roadside infrastructure, between vehicles and pedestrians, etc.

WO2022/045798 describes network configuration-based sidelink positioning method and apparatus. A method for performing wireless communication by a first device, and an apparatus supporting same are provided. The method may comprise the steps of: transmitting, to a base station, information related to a sidelink (SL) positioning group; receiving, from the base station, information related to an SL positioning reference signal (PRS) resource; and transmitting or receiving an SL PRS on the basis of the SL PRS resource, wherein the SL PRS is a reference signal for positioning performed between multiple devices in the SL positioning group, and the SL PRS resource is configured on the basis of the information related to the SL positioning group.

US2021/410098 describes a positioning signal measurement with discontinuous reception and wake-up signal. A positioning signal processing method at a user equipment includes: operating the user equipment in a discontinuous reception mode including time interleaved ON times of the discontinuous reception mode, during which the user equipment is in an active mode monitoring for a positioning signal measurement trigger signal, and OFF times of the discontinuous reception mode, during which the user equipment is in an inactive mode; receiving a wake-up signal at the user equipment; and determining, at the user equipment, whether to measure a positioning signal based on whether the wake-up signal indicates to implement the active mode during a scheduled discontinuous reception mode ON time or to skip the scheduled discontinuous reception mode ON time.

### SUMMARY

The invention is defined in the appended independent claims. Optional features are defined in the dependent claims.

Other objects and advantages associated with the aspects disclosed herein will be apparent to those skilled in the art based on the accompanying drawings and detailed description.

### BRIEF DESCRIPTION OF THE DRAWINGS

The accompanying drawings are presented to aid in the description of various aspects of the disclosure and are provided solely for illustration of the aspects and not limitation thereof.
FIG. 1 illustrates an example wireless communications system, according to aspects of the disclosure.
FIGS. 2A and 2B illustrate example wireless network structures, according to aspects of the disclosure.
FIGS. 3A, 3B, and 3C are simplified block diagrams of several sample aspects of components that may be employed in a user equipment (UE), a base station, and a network entity, respectively, and configured to support communications as taught herein.
FIGS. 4A and 4B illustrate various scenarios of interest for sidelink-only or joint Uu and sidelink positioning, according to aspects of the disclosure.
FIG. 5A illustrates an example call flow for Mode A discovery, and FIG. 5B illustrates an example call flow for Mode B discovery, according to aspects of the disclosure.
FIGS. 6A to 6C illustrate example discontinuous reception (DRX) configurations, according to aspects of the disclosure.
FIG. 7A illustrates an example call flow for a Mode 1 sidelink DRX (SL-DRX) configuration and FIG. 7B illustrates an example call flow for a Mode 2 SL-DRX configuration, according to aspects of the disclosure.
FIG. 8 is a diagram illustrating different SL-DRX parameters, according to aspects of the disclosure.
FIG. 9 is a diagram illustrating various aspects of a long DRX cycle, according to aspects of the disclosure.
FIG. 10 is a diagram illustrating an example resource pool for positioning within a sidelink resource pool, according to aspects of the disclosure.
FIG. 11 illustrates the two resource allocation modes for transmissions on a sidelink, according to aspects of the disclosure.
FIG. 12 illustrates an example method of sidelink communication, according to aspects of the disclosure.

### DETAILED DESCRIPTION

Aspects of the disclosure are provided in the following description and related drawings directed to various examples provided for illustration purposes. Alternate aspects may be devised without departing from the scope of the disclosure. Additionally, well-known elements of the disclosure will not be described in detail or will be omitted so as not to obscure the relevant details of the disclosure.

The words "exemplary" and/or "example" are used herein to mean "serving as an example, instance, or illustration." Any aspect described herein as "exemplary" and/or "example" is not necessarily to be construed as preferred or advantageous over other aspects. Likewise, the term "aspects of the disclosure" does not require that all aspects of the disclosure include the discussed feature, advantage or mode of operation.

Those of skill in the art will appreciate that the information and signals described below may be represented using any of a variety of different technologies and techniques. For example, data, instructions, commands, information, signals, bits, symbols, and chips that may be referenced throughout the description below may be represented by voltages, currents, electromagnetic waves, magnetic fields or particles, optical fields or particles, or any combination thereof, depending in part on the particular application, in part on the desired design, in part on the corresponding technology, etc.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, the sequence(s) of actions described herein can be considered to be embodied entirely within any form of non-transitory computer-readable storage medium having stored therein a corresponding set of computer instructions that, upon execution, would cause or instruct an associated processor of a device to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

As used herein, the terms "user equipment" (UE), "vehicle UE" (V-UE), "pedestrian UE" (P-UE), and "base station" are not intended to be specific or otherwise limited to any particular radio access technology (RAT), unless otherwise noted. In general, a UE may be any wireless communication device (e.g., vehicle on-board computer, vehicle navigation device, mobile phone, router, tablet computer, laptop computer, asset locating device, wearable (e.g., smartwatch, glasses, augmented reality (AR) / virtual reality (VR) headset, etc.), vehicle (e.g., automobile, motorcycle, bicycle, etc.), Internet of Things (IoT) device, etc.) used by a user to communicate over a wireless communications network. A UE may be mobile or may (e.g., at certain times) be stationary, and may communicate with a radio access network (RAN). As used herein, the term "UE" may be referred to interchangeably as a "mobile device," an "access terminal" or "AT," a "client device," a "wireless device," a "subscriber device," a "subscriber terminal," a "subscriber station," a "user terminal" or UT, a "mobile terminal," a "mobile station," or variations thereof.

A V-UE is a type of UE and may be any in-vehicle wireless communication device, such as a navigation system, a warning system, a heads-up display (HUD), an on-board computer, an in-vehicle infotainment system, an automated driving system (ADS), an advanced driver assistance system (ADAS), etc. Alternatively, a V-UE may be a portable wireless communication device (e.g., a cell phone, tablet computer, etc.) that is carried by the driver of the vehicle or a passenger in the vehicle. The term "V-UE" may refer to the in-vehicle wireless communication device or the vehicle itself, depending on the context. A P-UE is a type of UE and may be a portable wireless communication device that is carried by a pedestrian (i.e., a user that is not driving or riding in a vehicle). Generally, UEs can communicate with a core network via a RAN, and through the core network the UEs can be connected with external networks such as the Internet and with other UEs. Of course, other mechanisms of connecting to the core network and/or the Internet are also possible for the UEs, such as over wired access networks, wireless local area network (WLAN) networks (e.g., based on Institute of Electrical and Electronics Engineers (IEEE) 802.11, etc.) and so on.

A base station may operate according to one of several RATs in communication with UEs depending on the network in which it is deployed, and may be alternatively referred to as an access point (AP), a network node, a NodeB, an evolved NodeB (eNB), a next generation eNB (ng-eNB), a New Radio (NR) Node B (also referred to as a gNB or gNodeB), etc. A base station may be used primarily to support wireless access by UEs including supporting data, voice and/or signaling connections for the supported UEs. In some systems a base station may provide purely edge node signaling functions while in other systems it may provide additional control and/or network management functions. A communication link through which UEs can send signals to a base station is called an uplink (UL) channel (e.g., a reverse traffic channel, a reverse control channel, an access channel, etc.). A communication link through which the base station can send signals to UEs is called a downlink (DL) or forward link channel (e.g., a paging channel, a control channel, a broadcast channel, a forward traffic channel, etc.). As used herein the term traffic channel (TCH) can refer to either an UL / reverse or DL / forward traffic channel.

The term "base station" may refer to a single physical transmission-reception point (TRP) or to multiple physical TRPs that may or may not be co-located. For example, where the term "base station" refers to a single physical TRP, the physical TRP may be an antenna of the base station corresponding to a cell (or several cell sectors) of the base station. Where the term "base station" refers to multiple co-located physical TRPs, the physical TRPs may be an array of antennas (e.g., as in a multiple-input multiple-output (MIMO) system or where the base station employs beamforming) of the base station. Where the term "base station" refers to multiple non-co-located physical TRPs, the physical TRPs may be a distributed antenna system (DAS) (a network of spatially separated antennas connected to a common source via a transport medium) or a remote radio head (RRH) (a remote base station connected to a serving base station). Alternatively, the non-co-located physical TRPs may be the serving base station receiving the measurement report from the UE and a neighbor base station whose reference radio frequency (RF) signals the UE is measuring. Because a TRP is the point from which a base station transmits and receives wireless signals, as used herein, references to transmission from or reception at a base station are to be understood as referring to a particular TRP of the base station.

In some implementations that support positioning of UEs, a base station may not support wireless access by UEs (e.g., may not support data, voice, and/or signaling connections for UEs), but may instead transmit reference RF signals to UEs to be measured by the UEs and/or may receive and measure signals transmitted by the UEs. Such base stations may be referred to as positioning beacons (e.g., when transmitting RF signals to UEs) and/or as location measurement units (e.g., when receiving and measuring RF signals from UEs).

An "RF signal" comprises an electromagnetic wave of a given frequency that transports information through the space between a transmitter and a receiver. As used herein, a transmitter may transmit a single "RF signal" or multiple "RF signals" to a receiver. However, the receiver may receive multiple "RF signals" corresponding to each transmitted RF signal due to the propagation characteristics of RF signals through multipath channels. The same transmitted RF signal on different paths between the transmitter and receiver may be referred to as a "multipath" RF signal. As used herein, an RF signal may also be referred to as a "wireless signal" or simply a "signal" where it is clear from the context that the term "signal" refers to a wireless signal or an RF signal.

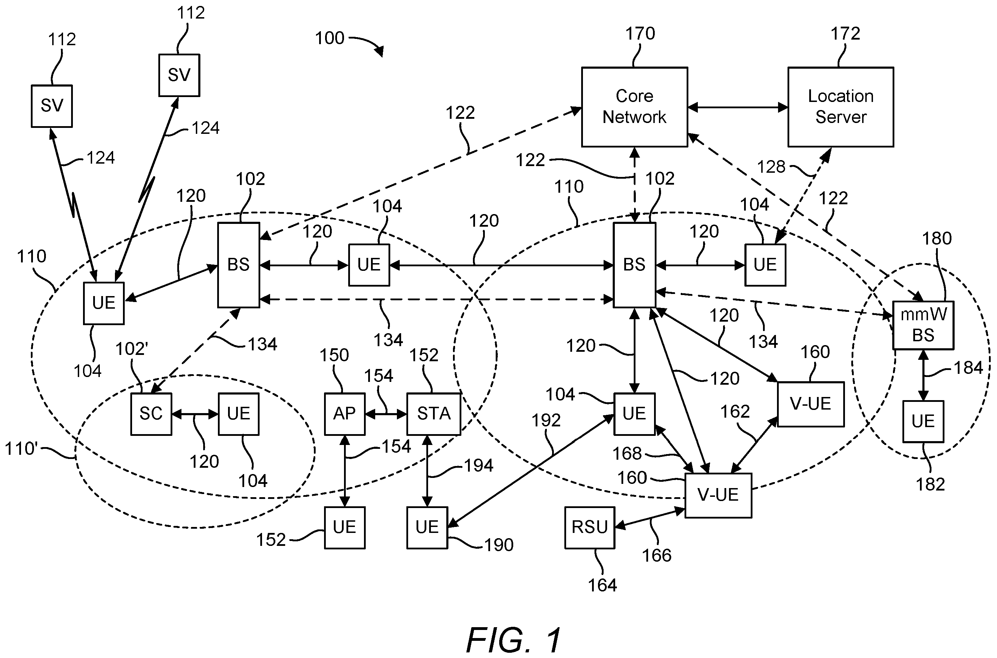

FIG. 1 illustrates an example wireless communications system 100, according to aspects of the disclosure. The wireless communications system 100 (which may also be referred to as a wireless wide area network (WWAN)) may include various base stations 102 (labelled "BS") and various UEs 104. The base stations 102 may include macro cell base stations (high power cellular base stations) and/or small cell base stations (low power cellular base stations). In an aspect, the macro cell base stations 102 may include eNBs and/or ng-eNBs where the wireless communications system 100 corresponds to an LTE network, or gNBs where the wireless communications system 100 corresponds to a NR network, or a combination of both, and the small cell base stations may include femtocells, picocells, microcells, etc.

The base stations 102 may collectively form a RAN and interface with a core network 170 (e.g., an evolved packet core (EPC) or 5G core (5GC)) through backhaul links 122, and through the core network 170 to one or more location servers 172 (e.g., a location management function (LMF) or a secure user plane location (SUPL) location platform (SLP)). The location server(s) 172 may be part of core network 170 or may be external to core network 170. A location server 172 may be integrated with a base station 102. A UE 104 may communicate with a location server 172 directly or indirectly. For example, a UE 104 may communicate with a location server 172 via the base station 102 that is currently serving that UE 104. A UE 104 may also communicate with a location server 172 through another path, such as via an application server (not shown), via another network, such as via a wireless local area network (WLAN) access point (AP) (e.g., AP 150 described below), and so on. For signaling purposes, communication between a UE 104 and a location server 172 may be represented as an indirect connection (e.g., through the core network 170, etc.) or a direct connection (e.g., as shown via direct connection 128), with the intervening nodes (if any) omitted from a signaling diagram for clarity.

In addition to other functions, the base stations 102 may perform functions that relate to one or more of transferring user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, RAN sharing, multimedia broadcast multicast service (MBMS), subscriber and equipment trace, RAN information management (RIM), paging, positioning, and delivery of warning messages. The base stations 102 may communicate with each other directly or indirectly (e.g., through the EPC / 5GC) over backhaul links 134, which may be wired or wireless.

The base stations 102 may wirelessly communicate with the UEs 104. Each of the base stations 102 may provide communication coverage for a respective geographic coverage area 110. In an aspect, one or more cells may be supported by a base station 102 in each geographic coverage area 110. A "cell" is a logical communication entity used for communication with a base station (e.g., over some frequency resource, referred to as a carrier frequency, component carrier, carrier, band, or the like), and may be associated with an identifier (e.g., a physical cell identifier (PCI), an enhanced cell identifier (ECI), a virtual cell identifier (VCI), a cell global identifier (CGI), etc.) for distinguishing cells operating via the same or a different carrier frequency. In some cases, different cells may be configured according to different protocol types (e.g., machine-type communication (MTC), narrowband IoT (NB-IoT), enhanced mobile broadband (eMBB), or others) that may provide access for different types of UEs. Because a cell is supported by a specific base station, the term "cell" may refer to either or both the logical communication entity and the base station that supports it, depending on the context. In some cases, the term "cell" may also refer to a geographic coverage area of a base station (e.g., a sector), insofar as a carrier frequency can be detected and used for communication within some portion of geographic coverage areas 110.

While neighboring macro cell base station 102 geographic coverage areas 110 may partially overlap (e.g., in a handover region), some of the geographic coverage areas 110 may be substantially overlapped by a larger geographic coverage area 110. For example, a small cell base station 102' (labelled "SC" for "small cell") may have a geographic coverage area 110' that substantially overlaps with the geographic coverage area 110 of one or more macro cell base stations 102. A network that includes both small cell and macro cell base stations may be known as a heterogeneous network. A heterogeneous network may also include home eNBs (HeNBs), which may provide service to a restricted group known as a closed subscriber group (CSG).

The communication links 120 between the base stations 102 and the UEs 104 may include uplink (also referred to as reverse link) transmissions from a UE 104 to a base station 102 and/or downlink (DL) (also referred to as forward link) transmissions from a base station 102 to a UE 104. The communication links 120 may use MIMO antenna technology, including spatial multiplexing, beamforming, and/or transmit diversity. The communication links 120 may be through one or more carrier frequencies. Allocation of carriers may be asymmetric with respect to downlink and uplink (e.g., more or less carriers may be allocated for downlink than for uplink).

The wireless communications system 100 may further include a wireless local area network (WLAN) access point (AP) 150 in communication with WLAN stations (STAs) 152 via communication links 154 in an unlicensed frequency spectrum (e.g., 5 GHz). When communicating in an unlicensed frequency spectrum, the WLAN STAs 152 and/or the WLAN AP 150 may perform a clear channel assessment (CCA) or listen before talk (LBT) procedure prior to communicating in order to determine whether the channel is available.

The small cell base station 102' may operate in a licensed and/or an unlicensed frequency spectrum. When operating in an unlicensed frequency spectrum, the small cell base station 102' may employ LTE or NR technology and use the same 5 GHz unlicensed frequency spectrum as used by the WLAN AP 150. The small cell base station 102', employing LTE / 5G in an unlicensed frequency spectrum, may boost coverage to and/or increase capacity of the access network. NR in unlicensed spectrum may be referred to as NR-U. LTE in an unlicensed spectrum may be referred to as LTE-U, licensed assisted access (LAA), or MulteFire.

The wireless communications system 100 may further include a mmW base station 180 that may operate in millimeter wave (mmW) frequencies and/or near mmW frequencies in communication with a UE 182. Extremely high frequency (EHF) is part of the RF in the electromagnetic spectrum. EHF has a range of 30 GHz to 300 GHz and a wavelength between 1 millimeter and 10 millimeters. Radio waves in this band may be referred to as a millimeter wave. Near mmW may extend down to a frequency of 3 GHz with a wavelength of 100 millimeters. The super high frequency (SHF) band extends between 3 GHz and 30 GHz, also referred to as centimeter wave. Communications using the mmW/near mmW radio frequency band have high path loss and a relatively short range. The mmW base station 180 and the UE 182 may utilize beamforming (transmit and/or receive) over a mm W communication link 184 to compensate for the extremely high path loss and short range. Further, it will be appreciated that in alternative configurations, one or more base stations 102 may also transmit using mmW or near mmW and beamforming. Accordingly, it will be appreciated that the foregoing illustrations are merely examples and should not be construed to limit the various aspects disclosed herein.

Transmit beamforming is a technique for focusing an RF signal in a specific direction. Traditionally, when a network node (e.g., a base station) broadcasts an RF signal, it broadcasts the signal in all directions (omni-directionally). With transmit beamforming, the network node determines where a given target device (e.g., a UE) is located (relative to the transmitting network node) and projects a stronger downlink RF signal in that specific direction, thereby providing a faster (in terms of data rate) and stronger RF signal for the receiving device(s). To change the directionality of the RF signal when transmitting, a network node can control the phase and relative amplitude of the RF signal at each of the one or more transmitters that are broadcasting the RF signal. For example, a network node may use an array of antennas (referred to as a "phased array" or an "antenna array") that creates a beam of RF waves that can be "steered" to point in different directions, without actually moving the antennas. Specifically, the RF current from the transmitter is fed to the individual antennas with the correct phase relationship so that the radio waves from the separate antennas add together to increase the radiation in a desired direction, while cancelling to suppress radiation in undesired directions.

Transmit beams may be quasi-co-located, meaning that they appear to the receiver (e.g., a UE) as having the same parameters, regardless of whether or not the transmitting antennas of the network node themselves are physically co-located. In NR, there are four types of quasi-co-location (QCL) relations. Specifically, a QCL relation of a given type means that certain parameters about a second reference RF signal on a second beam can be derived from information about a source reference RF signal on a source beam. Thus, if the source reference RF signal is QCL Type A, the receiver can use the source reference RF signal to estimate the Doppler shift, Doppler spread, average delay, and delay spread of a second reference RF signal transmitted on the same channel. If the source reference RF signal is QCL Type B, the receiver can use the source reference RF signal to estimate the Doppler shift and Doppler spread of a second reference RF signal transmitted on the same channel. If the source reference RF signal is QCL Type C, the receiver can use the source reference RF signal to estimate the Doppler shift and average delay of a second reference RF signal transmitted on the same channel. If the source reference RF signal is QCL Type D, the receiver can use the source reference RF signal to estimate the spatial receive parameter of a second reference RF signal transmitted on the same channel.

In receive beamforming, the receiver uses a receive beam to amplify RF signals detected on a given channel. For example, the receiver can increase the gain setting and/or adjust the phase setting of an array of antennas in a particular direction to amplify (e.g., to increase the gain level of) the RF signals received from that direction. Thus, when a receiver is said to beamform in a certain direction, it means the beam gain in that direction is high relative to the beam gain along other directions, or the beam gain in that direction is the highest compared to the beam gain in that direction of all other receive beams available to the receiver. This results in a stronger received signal strength (e.g., reference signal received power (RSRP), reference signal received quality (RSRQ), signal-to-interference-plus-noise ratio (SINR), etc.) of the RF signals received from that direction.

Transmit and receive beams may be spatially related. A spatial relation means that parameters for a second beam (e.g., a transmit or receive beam) for a second reference signal can be derived from information about a first beam (e.g., a receive beam or a transmit beam) for a first reference signal. For example, a UE may use a particular receive beam to receive a reference downlink reference signal (e.g., synchronization signal block (SSB)) from a base station. The UE can then form a transmit beam for sending an uplink reference signal (e.g., sounding reference signal (SRS)) to that base station based on the parameters of the receive beam.

Note that a "downlink" beam may be either a transmit beam or a receive beam, depending on the entity forming it. For example, if a base station is forming the downlink beam to transmit a reference signal to a UE, the downlink beam is a transmit beam. If the UE is forming the downlink beam, however, it is a receive beam to receive the downlink reference signal. Similarly, an "uplink" beam may be either a transmit beam or a receive beam, depending on the entity forming it. For example, if a base station is forming the uplink beam, it is an uplink receive beam, and if a UE is forming the uplink beam, it is an uplink transmit beam.

The electromagnetic spectrum is often subdivided, based on frequency/wavelength, into various classes, bands, channels, etc. In 5G NR two initial operating bands have been identified as frequency range designations FR1 (410 MHz - 7.125 GHz) and FR2 (24.25 GHz - 52.6 GHz). It should be understood that although a portion of FR1 is greater than 6 GHz, FR1 is often referred to (interchangeably) as a "Sub-6 GHz" band in various documents and articles. A similar nomenclature issue sometimes occurs with regard to FR2, which is often referred to (interchangeably) as a "millimeter wave" band in documents and articles, despite being different from the extremely high frequency (EHF) band (30 GHz - 300 GHz) which is identified by the International Telecommunications Union (ITU) as a "millimeter wave" band.

The frequencies between FR1 and FR2 are often referred to as mid-band frequencies. Recent 5G NR studies have identified an operating band for these mid-band frequencies as frequency range designation FR3 (7.125 GHz - 24.25 GHz). Frequency bands falling within FR3 may inherit FR1 characteristics and/or FR2 characteristics, and thus may effectively extend features of FR1 and/or FR2 into mid-band frequencies. In addition, higher frequency bands are currently being explored to extend 5G NR operation beyond 52.6 GHz. For example, three higher operating bands have been identified as frequency range designations FR4a or FR4-1 (52.6 GHz - 71 GHz), FR4 (52.6 GHz - 114.25 GHz), and FR5 (114.25 GHz - 300 GHz). Each of these higher frequency bands falls within the EHF band.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, FR4, FR4-a or FR4-1, and/or FR5, or may be within the EHF band.

In a multi-carrier system, such as 5G, one of the carrier frequencies is referred to as the "primary carrier" or "anchor carrier" or "primary serving cell" or "PCell," and the remaining carrier frequencies are referred to as "secondary carriers" or "secondary serving cells" or "SCells." In carrier aggregation, the anchor carrier is the carrier operating on the primary frequency (e.g., FR1) utilized by a UE 104/182 and the cell in which the UE 104/182 either performs the initial radio resource control (RRC) connection establishment procedure or initiates the RRC connection re-establishment procedure. The primary carrier carries all common and UE-specific control channels, and may be a carrier in a licensed frequency (however, this is not always the case). A secondary carrier is a carrier operating on a second frequency (e.g., FR2) that may be configured once the RRC connection is established between the UE 104 and the anchor carrier and that may be used to provide additional radio resources. In some cases, the secondary carrier may be a carrier in an unlicensed frequency. The secondary carrier may contain only necessary signaling information and signals, for example, those that are UE-specific may not be present in the secondary carrier, since both primary uplink and downlink carriers are typically UE-specific. This means that different UEs 104/182 in a cell may have different downlink primary carriers. The same is true for the uplink primary carriers. The network is able to change the primary carrier of any UE 104/182 at any time. This is done, for example, to balance the load on different carriers. Because a "serving cell" (whether a PCell or an SCell) corresponds to a carrier frequency / component carrier over which some base station is communicating, the term "cell," "serving cell," "component carrier," "carrier frequency," and the like can be used interchangeably.

For example, still referring to FIG. 1, one of the frequencies utilized by the macro cell base stations 102 may be an anchor carrier (or "PCell") and other frequencies utilized by the macro cell base stations 102 and/or the mmW base station 180 may be secondary carriers ("SCells"). The simultaneous transmission and/or reception of multiple carriers enables the UE 104/182 to significantly increase its data transmission and/or reception rates. For example, two 20 MHz aggregated carriers in a multi-carrier system would theoretically lead to a two-fold increase in data rate (i.e., 40 MHz), compared to that attained by a single 20 MHz carrier.

In the example of FIG. 1, any of the illustrated UEs (shown in FIG. 1 as a single UE 104 for simplicity) may receive signals 124 from one or more Earth orbiting space vehicles (SVs) 112 (e.g., satellites). In an aspect, the SVs 112 may be part of a satellite positioning system that a UE 104 can use as an independent source of location information. A satellite positioning system typically includes a system of transmitters (e.g., SVs 112) positioned to enable receivers (e.g., UEs 104) to determine their location on or above the Earth based, at least in part, on positioning signals (e.g., signals 124) received from the transmitters. Such a transmitter typically transmits a signal marked with a repeating pseudo-random noise (PN) code of a set number of chips. While typically located in SVs 112, transmitters may sometimes be located on ground-based control stations, base stations 102, and/or other UEs 104. A UE 104 may include one or more dedicated receivers specifically designed to receive signals 124 for deriving geo location information from the SVs 112.

In a satellite positioning system, the use of signals 124 can be augmented by various satellite-based augmentation systems (SBAS) that may be associated with or otherwise enabled for use with one or more global and/or regional navigation satellite systems. For example an SBAS may include an augmentation system(s) that provides integrity information, differential corrections, etc., such as the Wide Area Augmentation System (WAAS), the European Geostationary Navigation Overlay Service (EGNOS), the Multifunctional Satellite Augmentation System (MSAS), the Global Positioning System (GPS) Aided Geo Augmented Navigation or GPS and Geo Augmented Navigation system (GAGAN), and/or the like. Thus, as used herein, a satellite positioning system may include any combination of one or more global and/or regional navigation satellites associated with such one or more satellite positioning systems.

In an aspect, SVs 112 may additionally or alternatively be part of one or more non-terrestrial networks (NTNs). In an NTN, an SV 112 is connected to an earth station (also referred to as a ground station, NTN gateway, or gateway), which in turn is connected to an element in a 5G network, such as a modified base station 102 (without a terrestrial antenna) or a network node in a 5GC. This element would in turn provide access to other elements in the 5G network and ultimately to entities external to the 5G network, such as Internet web servers and other user devices. In that way, a UE 104 may receive communication signals (e.g., signals 124) from an SV 112 instead of, or in addition to, communication signals from a terrestrial base station 102.

Leveraging the increased data rates and decreased latency of NR, among other things, vehicle-to-everything (V2X) communication technologies are being implemented to support intelligent transportation systems (ITS) applications, such as wireless communications between vehicles (vehicle-to-vehicle (V2V)), between vehicles and the roadside infrastructure (vehicle-to-infrastructure (V2I)), and between vehicles and pedestrians (vehicle-to-pedestrian (V2P)). The goal is for vehicles to be able to sense the environment around them and communicate that information to other vehicles, infrastructure, and personal mobile devices. Such vehicle communication will enable safety, mobility, and environmental advancements that current technologies are unable to provide. Once fully implemented, the technology is expected to reduce unimpaired vehicle crashes by 80%.

Still referring to FIG. 1, the wireless communications system 100 may include multiple V-UEs 160 that may communicate with base stations 102 over communication links 120 using the Uu interface (i.e., the air interface between a UE and a base station). V-UEs 160 may also communicate directly with each other over a wireless sidelink 162, with a roadside unit (RSU) 164 (a roadside access point) over a wireless sidelink 166, or with sidelink-capable UEs 104 over a wireless sidelink 168 using the PC5 interface (i.e., the air interface between sidelink-capable UEs). A wireless sidelink (or just "sidelink") is an adaptation of the core cellular (e.g., LTE, NR) standard that allows direct communication between two or more UEs without the communication needing to go through a base station. Sidelink communication may be unicast or multicast, and may be used for device-to-device (D2D) media-sharing, V2V communication, V2X communication (e.g., cellular V2X (cV2X) communication, enhanced V2X (eV2X) communication, etc.), emergency rescue applications, etc. One or more of a group of V-UEs 160 utilizing sidelink communications may be within the geographic coverage area 110 of a base station 102. Other V-UEs 160 in such a group may be outside the geographic coverage area 110 of a base station 102 or be otherwise unable to receive transmissions from a base station 102. In some cases, groups of V-UEs 160 communicating via sidelink communications may utilize a one-to-many (1:M) system in which each V-UE 160 transmits to every other V-UE 160 in the group. In some cases, a base station 102 facilitates the scheduling of resources for sidelink communications. In other cases, sidelink communications are carried out between V-UEs 160 without the involvement of a base station 102.

In an aspect, the sidelinks 162, 166, 168 may operate over a wireless communication medium of interest, which may be shared with other wireless communications between other vehicles and/or infrastructure access points, as well as other RATs. A "medium" may be composed of one or more time, frequency, and/or space communication resources (e.g., encompassing one or more channels across one or more carriers) associated with wireless communication between one or more transmitter / receiver pairs.

In an aspect, the sidelinks 162, 166, 168 may be cV2X links. A first generation of cV2X has been standardized in LTE, and the next generation is expected to be defined in NR. cV2X is a cellular technology that also enables device-to-device communications. In the U.S. and Europe, cV2X is expected to operate in the licensed ITS band in sub-6GHz. Other bands may be allocated in other countries. Thus, as a particular example, the medium of interest utilized by sidelinks 162, 166, 168 may correspond to at least a portion of the licensed ITS frequency band of sub-6GHz. However, the present disclosure is not limited to this frequency band or cellular technology.

In an aspect, the sidelinks 162, 166, 168 may be dedicated short-range communications (DSRC) links. DSRC is a one-way or two-way short-range to medium-range wireless communication protocol that uses the wireless access for vehicular environments (WAVE) protocol, also known as IEEE 802.11p, for V2V, V2I, and V2P communications. IEEE 802.11p is an approved amendment to the IEEE 802.11 standard and operates in the licensed ITS band of 5.9 GHz (5.85-5.925 GHz) in the U.S. In Europe, IEEE 802.11p operates in the ITS G5A band (5.875 - 5.905 MHz). Other bands may be allocated in other countries. The V2V communications briefly described above occur on the Safety Channel, which in the U.S. is typically a 10 MHz channel that is dedicated to the purpose of safety. The remainder of the DSRC band (the total bandwidth is 75 MHz) is intended for other services of interest to drivers, such as road rules, tolling, parking automation, etc. Thus, as a particular example, the mediums of interest utilized by sidelinks 162, 166, 168 may correspond to at least a portion of the licensed ITS frequency band of 5.9 GHz.

Alternatively, the medium of interest may correspond to at least a portion of an unlicensed frequency band shared among various RATs. Although different licensed frequency bands have been reserved for certain communication systems (e.g., by a government entity such as the Federal Communications Commission (FCC) in the United States), these systems, in particular those employing small cell access points, have recently extended operation into unlicensed frequency bands such as the Unlicensed National Information Infrastructure (U-NII) band used by wireless local area network (WLAN) technologies, most notably IEEE 802.11x WLAN technologies generally referred to as "Wi-Fi." Example systems of this type include different variants of CDMA systems, TDMA systems, FDMA systems, orthogonal FDMA (OFDMA) systems, single-carrier FDMA (SC-FDMA) systems, and so on.

Communications between the V-UEs 160 are referred to as V2V communications, communications between the V-UEs 160 and the one or more RSUs 164 are referred to as V2I communications, and communications between the V-UEs 160 and one or more UEs 104 (where the UEs 104 are P-UEs) are referred to as V2P communications. The V2V communications between V-UEs 160 may include, for example, information about the position, speed, acceleration, heading, and other vehicle data of the V-UEs 160. The V2I information received at a V-UE 160 from the one or more RSUs 164 may include, for example, road rules, parking automation information, etc. The V2P communications between a V-UE 160 and a UE 104 may include information about, for example, the position, speed, acceleration, and heading of the V-UE 160 and the position, speed (e.g., where the UE 104 is carried by a user on a bicycle), and heading of the UE 104.

Note that although FIG. 1 only illustrates two of the UEs as V-UEs (V-UEs 160), any of the illustrated UEs (e.g., UEs 104, 152, 182, 190) may be V-UEs. In addition, while only the V-UEs 160 and a single UE 104 have been illustrated as being connected over a sidelink, any of the UEs illustrated in FIG. 1, whether V-UEs, P-UEs, etc., may be capable of sidelink communication. Further, although only UE 182 was described as being capable of beam forming, any of the illustrated UEs, including V-UEs 160, may be capable of beam forming. Where V-UEs 160 are capable of beam forming, they may beam form towards each other (i.e., towards other V-UEs 160), towards RSUs 164, towards other UEs (e.g., UEs 104, 152, 182, 190), etc. Thus, in some cases, V-UEs 160 may utilize beamforming over sidelinks 162, 166, and 168.

The wireless communications system 100 may further include one or more UEs, such as UE 190, that connects indirectly to one or more communication networks via one or more device-to-device (D2D) peer-to-peer (P2P) links. In the example of FIG. 1, UE 190 has a D2D P2P link 192 with one of the UEs 104 connected to one of the base stations 102 (e.g., through which UE 190 may indirectly obtain cellular connectivity) and a D2D P2P link 194 with WLAN STA 152 connected to the WLAN AP 150 (through which UE 190 may indirectly obtain WLAN-based Internet connectivity). In an example, the D2D P2P links 192 and 194 may be supported with any well-known D2D RAT, such as LTE Direct (LTE-D), WiFi Direct (WiFi-D), Bluetooth^{®}, and so on. As another example, the D2D P2P links 192 and 194 may be sidelinks, as described above with reference to sidelinks 162, 166, and 168.

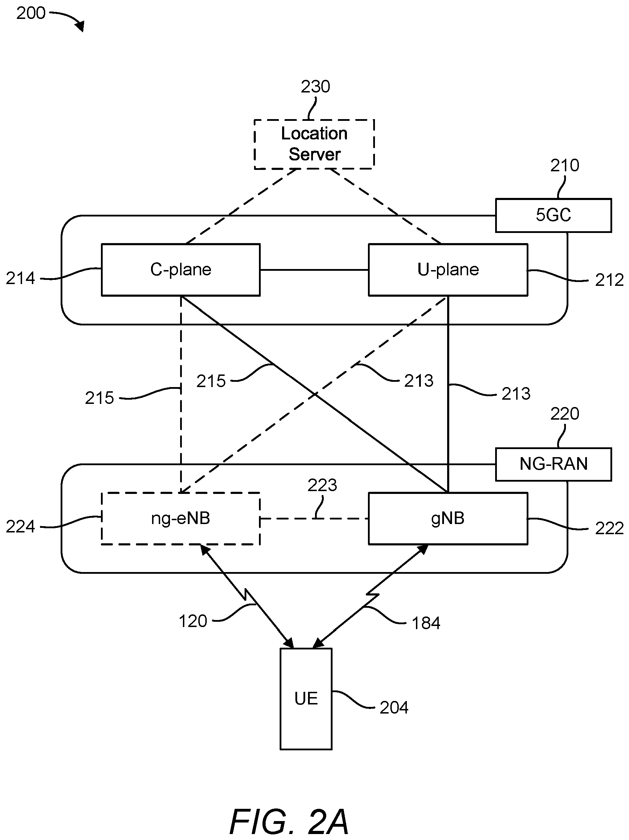

**FIG. 2A** illustrates an example wireless network structure 200. For example, a 5GC 210 (also referred to as a Next Generation Core (NGC)) can be viewed functionally as control plane (C-plane) functions 214 (e.g., UE registration, authentication, network access, gateway selection, etc.) and user plane (U-plane) functions 212, (e.g., UE gateway function, access to data networks, IP routing, etc.) which operate cooperatively to form the core network. User plane interface (NG-U) 213 and control plane interface (NG-C) 215 connect the gNB 222 to the 5GC 210 and specifically to the user plane functions 212 and control plane functions 214, respectively. In an additional configuration, an ng-eNB 224 may also be connected to the 5GC 210 via NG-C 215 to the control plane functions 214 and NG-U 213 to user plane functions 212. Further, ng-eNB 224 may directly communicate with gNB 222 via a backhaul connection 223. In some configurations, a Next Generation RAN (NG-RAN) 220 may have one or more gNBs 222, while other configurations include one or more of both ng-eNBs 224 and gNBs 222. Either (or both) gNB 222 or ng-eNB 224 may communicate with one or more UEs 204 (e.g., any of the UEs described herein).

Another optional aspect may include a location server 230, which may be in communication with the 5GC 210 to provide location assistance for UE(s) 204. The location server 230 can be implemented as a plurality of separate servers (e.g., physically separate servers, different software modules on a single server, different software modules spread across multiple physical servers, etc.), or alternately may each correspond to a single server. The location server 230 can be configured to support one or more location services for UEs 204 that can connect to the location server 230 via the core network, 5GC 210, and/or via the Internet (not illustrated). Further, the location server 230 may be integrated into a component of the core network, or alternatively may be external to the core network (e.g., a third party server, such as an original equipment manufacturer (OEM) server or service server).

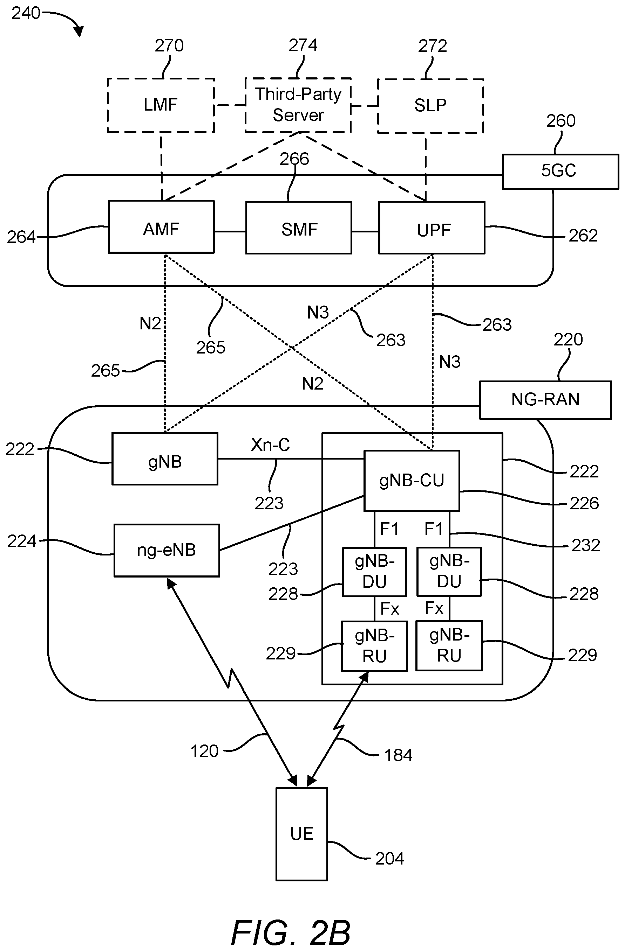

**FIG. 2B** illustrates another example wireless network structure 240. A 5GC 260 (which may correspond to 5GC 210 in FIG. 2A) can be viewed functionally as control plane functions, provided by an access and mobility management function (AMF) 264, and user plane functions, provided by a user plane function (UPF) 262, which operate cooperatively to form the core network (i.e., 5GC 260). The functions of the AMF 264 include registration management, connection management, reachability management, mobility management, lawful interception, transport for session management (SM) messages between one or more UEs 204 (e.g., any of the UEs described herein) and a session management function (SMF) 266, transparent proxy services for routing SM messages, access authentication and access authorization, transport for short message service (SMS) messages between the UE 204 and the short message service function (SMSF) (not shown), and security anchor functionality (SEAF). The AMF 264 also interacts with an authentication server function (AUSF) (not shown) and the UE 204, and receives the intermediate key that was established as a result of the UE 204 authentication process. In the case of authentication based on a UMTS (universal mobile telecommunications system) subscriber identity module (USIM), the AMF 264 retrieves the security material from the AUSF. The functions of the AMF 264 also include security context management (SCM). The SCM receives a key from the SEAF that it uses to derive access-network specific keys. The functionality of the AMF 264 also includes location services management for regulatory services, transport for location services messages between the UE 204 and a location management function (LMF) 270 (which acts as a location server 230), transport for location services messages between the NG-RAN 220 and the LMF 270, evolved packet system (EPS) bearer identifier allocation for interworking with the EPS, and UE 204 mobility event notification. In addition, the AMF 264 also supports functionalities for non-3GPP (Third Generation Partnership Project) access networks.

Functions of the UPF 262 include acting as an anchor point for intra-/inter-RAT mobility (when applicable), acting as an external protocol data unit (PDU) session point of interconnect to a data network (not shown), providing packet routing and forwarding, packet inspection, user plane policy rule enforcement (e.g., gating, redirection, traffic steering), lawful interception (user plane collection), traffic usage reporting, quality of service (QoS) handling for the user plane (e.g., uplink/ downlink rate enforcement, reflective QoS marking in the downlink), uplink traffic verification (service data flow (SDF) to QoS flow mapping), transport level packet marking in the uplink and downlink, downlink packet buffering and downlink data notification triggering, and sending and forwarding of one or more "end markers" to the source RAN node. The UPF 262 may also support transfer of location services messages over a user plane between the UE 204 and a location server, such as an SLP 272.

The functions of the SMF 266 include session management, UE Internet protocol (IP) address allocation and management, selection and control of user plane functions, configuration of traffic steering at the UPF 262 to route traffic to the proper destination, control of part of policy enforcement and QoS, and downlink data notification. The interface over which the SMF 266 communicates with the AMF 264 is referred to as the N11 interface.

Another optional aspect may include an LMF 270, which may be in communication with the 5GC 260 to provide location assistance for UEs 204. The LMF 270 can be implemented as a plurality of separate servers (e.g., physically separate servers, different software modules on a single server, different software modules spread across multiple physical servers, etc.), or alternately may each correspond to a single server. The LMF 270 can be configured to support one or more location services for UEs 204 that can connect to the LMF 270 via the core network, 5GC 260, and/or via the Internet (not illustrated). The SLP 272 may support similar functions to the LMF 270, but whereas the LMF 270 may communicate with the AMF 264, NG-RAN 220, and UEs 204 over a control plane (e.g., using interfaces and protocols intended to convey signaling messages and not voice or data), the SLP 272 may communicate with UEs 204 and external clients (e.g., third-party server 274) over a user plane (e.g., using protocols intended to carry voice and/or data like the transmission control protocol (TCP) and/or IP).

Yet another optional aspect may include a third-party server 274, which may be in communication with the LMF 270, the SLP 272, the 5GC 260 (e.g., via the AMF 264 and/or the UPF 262), the NG-RAN 220, and/or the UE 204 to obtain location information (e.g., a location estimate) for the UE 204. As such, in some cases, the third-party server 274 may be referred to as a location services (LCS) client or an external client. The third-party server 274 can be implemented as a plurality of separate servers (e.g., physically separate servers, different software modules on a single server, different software modules spread across multiple physical servers, etc.), or alternately may each correspond to a single server.

User plane interface 263 and control plane interface 265 connect the 5GC 260, and specifically the UPF 262 and AMF 264, respectively, to one or more gNBs 222 and/or ng-eNBs 224 in the NG-RAN 220. The interface between gNB(s) 222 and/or ng-eNB(s) 224 and the AMF 264 is referred to as the "N2" interface, and the interface between gNB(s) 222 and/or ng-eNB(s) 224 and the UPF 262 is referred to as the "N3" interface. The gNB(s) 222 and/or ng-eNB(s) 224 of the NG-RAN 220 may communicate directly with each other via backhaul connections 223, referred to as the "Xn-C" interface. One or more of gNBs 222 and/or ng-eNBs 224 may communicate with one or more UEs 204 over a wireless interface, referred to as the "Uu" interface.

The functionality of a gNB 222 may be divided between a gNB central unit (gNB-CU) 226, one or more gNB distributed units (gNB-DUs) 228, and one or more gNB radio units (gNB-RUs) 229. A gNB-CU 226 is a logical node that includes the base station functions of transferring user data, mobility control, radio access network sharing, positioning, session management, and the like, except for those functions allocated exclusively to the gNB-DU(s) 228. More specifically, the gNB-CU 226 generally host the radio resource control (RRC), service data adaptation protocol (SDAP), and packet data convergence protocol (PDCP) protocols of the gNB 222. A gNB-DU 228 is a logical node that generally hosts the radio link control (RLC) and medium access control (MAC) layer of the gNB 222. Its operation is controlled by the gNB-CU 226. One gNB-DU 228 can support one or more cells, and one cell is supported by only one gNB-DU 228. The interface 232 between the gNB-CU 226 and the one or more gNB-DUs 228 is referred to as the "F1" interface. The physical (PHY) layer functionality of a gNB 222 is generally hosted by one or more standalone gNB-RUs 229 that perform functions such as power amplification and signal transmission/reception. The interface between a gNB-DU 228 and a gNB-RU 229 is referred to as the "Fx" interface. Thus, a UE 204 communicates with the gNB-CU 226 via the RRC, SDAP, and PDCP layers, with a gNB-DU 228 via the RLC and MAC layers, and with a gNB-RU 229 via the PHY layer.

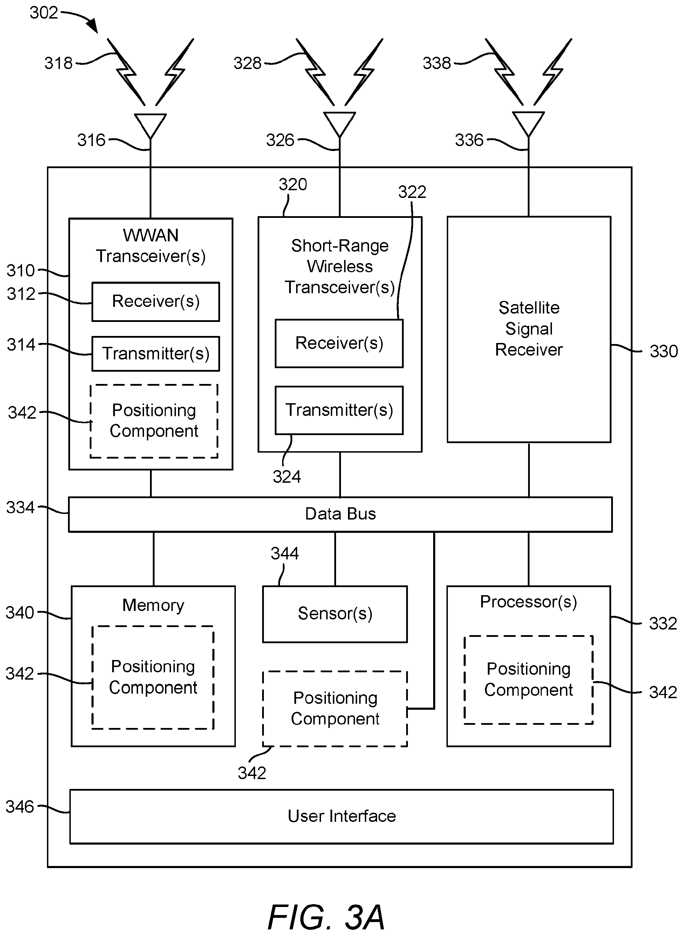

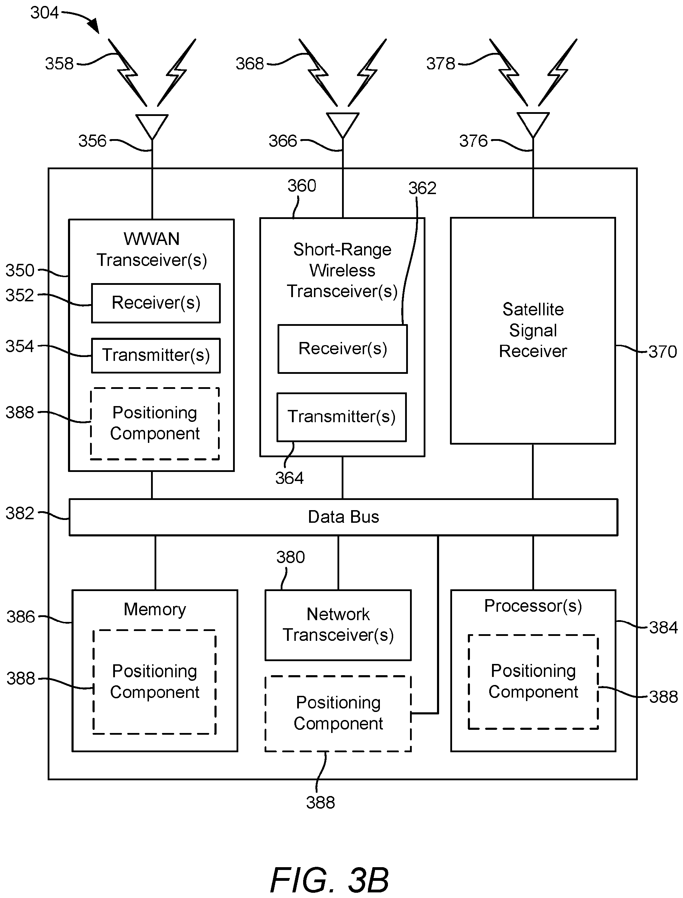

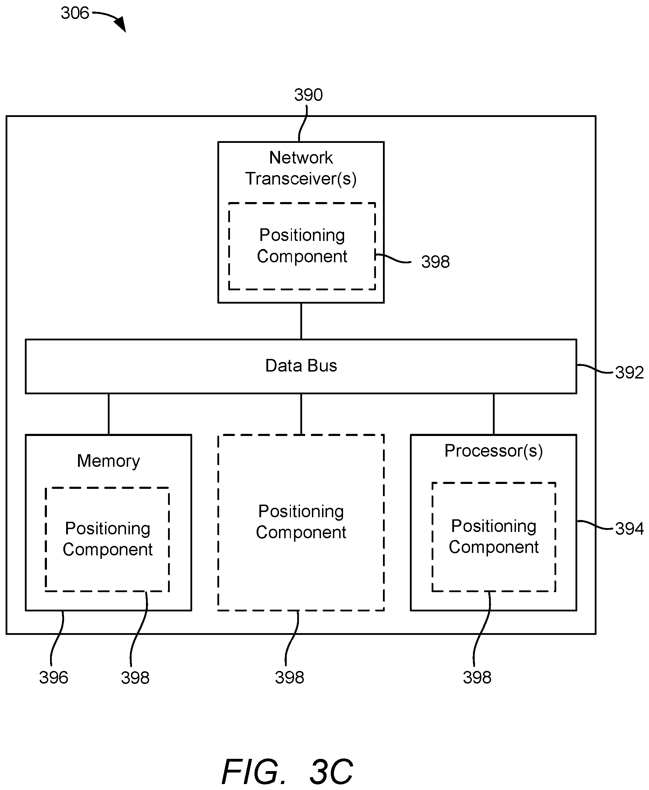

**FIGS. 3A****,** **3B****, and** **3C** illustrate several example components (represented by corresponding blocks) that may be incorporated into a UE 302 (which may correspond to any of the UEs described herein), a base station 304 (which may correspond to any of the base stations described herein), and a network entity 306 (which may correspond to or embody any of the network functions described herein, including the location server 230 and the LMF 270, or alternatively may be independent from the NG-RAN 220 and/or 5GC 210/260 infrastructure depicted in FIGS. 2A and 2B, such as a private network) to support the operations described herein. It will be appreciated that these components may be implemented in different types of apparatuses in different implementations (e.g., in an ASIC, in a system-on-chip (SoC), etc.). The illustrated components may also be incorporated into other apparatuses in a communication system. For example, other apparatuses in a system may include components similar to those described to provide similar functionality. Also, a given apparatus may contain one or more of the components. For example, an apparatus may include multiple transceiver components that enable the apparatus to operate on multiple carriers and/or communicate via different technologies.

The UE 302 and the base station 304 each include one or more wireless wide area network (WWAN) transceivers 310 and 350, respectively, providing means for communicating (e.g., means for transmitting, means for receiving, means for measuring, means for tuning, means for refraining from transmitting, etc.) via one or more wireless communication networks (not shown), such as an NR network, an LTE network, a GSM network, and/or the like. The WWAN transceivers 310 and 350 may each be connected to one or more antennas 316 and 356, respectively, for communicating with other network nodes, such as other UEs, access points, base stations (e.g., eNBs, gNBs), etc., via at least one designated RAT (e.g., NR, LTE, GSM, etc.) over a wireless communication medium of interest (e.g., some set of time/frequency resources in a particular frequency spectrum). The WWAN transceivers 310 and 350 may be variously configured for transmitting and encoding signals 318 and 358 (e.g., messages, indications, information, and so on), respectively, and, conversely, for receiving and decoding signals 318 and 358 (e.g., messages, indications, information, pilots, and so on), respectively, in accordance with the designated RAT. Specifically, the WWAN transceivers 310 and 350 include one or more transmitters 314 and 354, respectively, for transmitting and encoding signals 318 and 358, respectively, and one or more receivers 312 and 352, respectively, for receiving and decoding signals 318 and 358, respectively.

The UE 302 and the base station 304 each also include, at least in some cases, one or more short-range wireless transceivers 320 and 360, respectively. The short-range wireless transceivers 320 and 360 may be connected to one or more antennas 326 and 366, respectively, and provide means for communicating (e.g., means for transmitting, means for receiving, means for measuring, means for tuning, means for refraining from transmitting, etc.) with other network nodes, such as other UEs, access points, base stations, etc., via at least one designated RAT (e.g., WiFi, LTE-D, Bluetooth^{®}, Zigbee^{®}, Z-Wave^{®}, PC5, dedicated short-range communications (DSRC), wireless access for vehicular environments (WAVE), near-field communication (NFC), ultra-wideband (UWB), etc.) over a wireless communication medium of interest. The short-range wireless transceivers 320 and 360 may be variously configured for transmitting and encoding signals 328 and 368 (e.g., messages, indications, information, and so on), respectively, and, conversely, for receiving and decoding signals 328 and 368 (e.g., messages, indications, information, pilots, and so on), respectively, in accordance with the designated RAT. Specifically, the short-range wireless transceivers 320 and 360 include one or more transmitters 324 and 364, respectively, for transmitting and encoding signals 328 and 368, respectively, and one or more receivers 322 and 362, respectively, for receiving and decoding signals 328 and 368, respectively. As specific examples, the short-range wireless transceivers 320 and 360 may be WiFi transceivers, Bluetooth^{®} transceivers, Zigbee^{®} and/or Z-Wave^{®} transceivers, NFC transceivers, UWB transceivers, or vehicle-to-vehicle (V2V) and/or vehicle-to-everything (V2X) transceivers.

The UE 302 and the base station 304 also include, at least in some cases, satellite signal receivers 330 and 370. The satellite signal receivers 330 and 370 may be connected to one or more antennas 336 and 376, respectively, and may provide means for receiving and/or measuring satellite positioning/communication signals 338 and 378, respectively. Where the satellite signal receivers 330 and 370 are satellite positioning system receivers, the satellite positioning/communication signals 338 and 378 may be global positioning system (GPS) signals, global navigation satellite system (GLONASS) signals, Galileo signals, Beidou signals, Indian Regional Navigation Satellite System (NAVIC), Quasi-Zenith Satellite System (QZSS), etc. Where the satellite signal receivers 330 and 370 are non-terrestrial network (NTN) receivers, the satellite positioning/communication signals 338 and 378 may be communication signals (e.g., carrying control and/or user data) originating from a 5G network. The satellite signal receivers 330 and 370 may comprise any suitable hardware and/or software for receiving and processing satellite positioning/communication signals 338 and 378, respectively. The satellite signal receivers 330 and 370 may request information and operations as appropriate from the other systems, and, at least in some cases, perform calculations to determine locations of the UE 302 and the base station 304, respectively, using measurements obtained by any suitable satellite positioning system algorithm.

The base station 304 and the network entity 306 each include one or more network transceivers 380 and 390, respectively, providing means for communicating (e.g., means for transmitting, means for receiving, etc.) with other network entities (e.g., other base stations 304, other network entities 306). For example, the base station 304 may employ the one or more network transceivers 380 to communicate with other base stations 304 or network entities 306 over one or more wired or wireless backhaul links. As another example, the network entity 306 may employ the one or more network transceivers 390 to communicate with one or more base station 304 over one or more wired or wireless backhaul links, or with other network entities 306 over one or more wired or wireless core network interfaces.

A transceiver may be configured to communicate over a wired or wireless link. A transceiver (whether a wired transceiver or a wireless transceiver) includes transmitter circuitry (e.g., transmitters 314, 324, 354, 364) and receiver circuitry (e.g., receivers 312, 322, 352, 362). A transceiver may be an integrated device (e.g., embodying transmitter circuitry and receiver circuitry in a single device) in some implementations, may comprise separate transmitter circuitry and separate receiver circuitry in some implementations, or may be embodied in other ways in other implementations. The transmitter circuitry and receiver circuitry of a wired transceiver (e.g., network transceivers 380 and 390 in some implementations) may be coupled to one or more wired network interface ports. Wireless transmitter circuitry (e.g., transmitters 314, 324, 354, 364) may include or be coupled to a plurality of antennas (e.g., antennas 316, 326, 356, 366), such as an antenna array, that permits the respective apparatus (e.g., UE 302, base station 304) to perform transmit "beamforming," as described herein. Similarly, wireless receiver circuitry (e.g., receivers 312, 322, 352, 362) may include or be coupled to a plurality of antennas (e.g., antennas 316, 326, 356, 366), such as an antenna array, that permits the respective apparatus (e.g., UE 302, base station 304) to perform receive beamforming, as described herein. In an aspect, the transmitter circuitry and receiver circuitry may share the same plurality of antennas (e.g., antennas 316, 326, 356, 366), such that the respective apparatus can only receive or transmit at a given time, not both at the same time. A wireless transceiver (e.g., WWAN transceivers 310 and 350, short-range wireless transceivers 320 and 360) may also include a network listen module (NLM) or the like for performing various measurements.

As used herein, the various wireless transceivers (e.g., transceivers 310, 320, 350, and 360, and network transceivers 380 and 390 in some implementations) and wired transceivers (e.g., network transceivers 380 and 390 in some implementations) may generally be characterized as "a transceiver," "at least one transceiver," or "one or more transceivers." As such, whether a particular transceiver is a wired or wireless transceiver may be inferred from the type of communication performed. For example, backhaul communication between network devices or servers will generally relate to signaling via a wired transceiver, whereas wireless communication between a UE (e.g., UE 302) and a base station (e.g., base station 304) will generally relate to signaling via a wireless transceiver.

The UE 302, the base station 304, and the network entity 306 also include other components that may be used in conjunction with the operations as disclosed herein. The UE 302, the base station 304, and the network entity 306 include one or more processors 332, 384, and 394, respectively, for providing functionality relating to, for example, wireless communication, and for providing other processing functionality. The processors 332, 384, and 394 may therefore provide means for processing, such as means for determining, means for calculating, means for receiving, means for transmitting, means for indicating, etc. In an aspect, the processors 332, 384, and 394 may include, for example, one or more general purpose processors, multi-core processors, central processing units (CPUs), ASICs, digital signal processors (DSPs), field programmable gate arrays (FPGAs), other programmable logic devices or processing circuitry, or various combinations thereof.

The UE 302, the base station 304, and the network entity 306 include memory circuitry implementing memories 340, 386, and 396 (e.g., each including a memory device), respectively, for maintaining information (e.g., information indicative of reserved resources, thresholds, parameters, and so on). The memories 340, 386, and 396 may therefore provide means for storing, means for retrieving, means for maintaining, etc. In some cases, the UE 302, the base station 304, and the network entity 306 may include positioning component 342, 388, and 398, respectively. The positioning component 342, 388, and 398 may be hardware circuits that are part of or coupled to the processors 332, 384, and 394, respectively, that, when executed, cause the UE 302, the base station 304, and the network entity 306 to perform the functionality described herein. In other aspects, the positioning component 342, 388, and 398 may be external to the processors 332, 384, and 394 (e.g., part of a modem processing system, integrated with another processing system, etc.). Alternatively, the positioning component 342, 388, and 398 may be memory modules stored in the memories 340, 386, and 396, respectively, that, when executed by the processors 332, 384, and 394 (or a modem processing system, another processing system, etc.), cause the UE 302, the base station 304, and the network entity 306 to perform the functionality described herein. FIG. 3A illustrates possible locations of the positioning component 342, which may be, for example, part of the one or more WWAN transceivers 310, the memory 340, the one or more processors 332, or any combination thereof, or may be a standalone component. FIG. 3B illustrates possible locations of the positioning component 388, which may be, for example, part of the one or more WWAN transceivers 350, the memory 386, the one or more processors 384, or any combination thereof, or may be a standalone component. FIG. 3C illustrates possible locations of the positioning component 398, which may be, for example, part of the one or more network transceivers 390, the memory 396, the one or more processors 394, or any combination thereof, or may be a standalone component.

The UE 302 may include one or more sensors 344 coupled to the one or more processors 332 to provide means for sensing or detecting movement and/or orientation information that is independent of motion data derived from signals received by the one or more WWAN transceivers 310, the one or more short-range wireless transceivers 320, and/or the satellite signal receiver 330. By way of example, the sensor(s) 344 may include an accelerometer (e.g., a micro-electrical mechanical systems (MEMS) device), a gyroscope, a geomagnetic sensor (e.g., a compass), an altimeter (e.g., a barometric pressure altimeter), and/or any other type of movement detection sensor. Moreover, the sensor(s) 344 may include a plurality of different types of devices and combine their outputs in order to provide motion information. For example, the sensor(s) 344 may use a combination of a multi-axis accelerometer and orientation sensors to provide the ability to compute positions in two-dimensional (2D) and/or three-dimensional (3D) coordinate systems.

In addition, the UE 302 includes a user interface 346 providing means for providing indications (e.g., audible and/or visual indications) to a user and/or for receiving user input (e.g., upon user actuation of a sensing device such a keypad, a touch screen, a microphone, and so on). Although not shown, the base station 304 and the network entity 306 may also include user interfaces.

Referring to the one or more processors 384 in more detail, in the downlink, IP packets from the network entity 306 may be provided to the processor 384. The one or more processors 384 may implement functionality for an RRC layer, a packet data convergence protocol (PDCP) layer, a radio link control (RLC) layer, and a medium access control (MAC) layer. The one or more processors 384 may provide RRC layer functionality associated with broadcasting of system information (e.g., master information block (MIB), system information blocks (SIBs)), RRC connection control (e.g., RRC connection paging, RRC connection establishment, RRC connection modification, and RRC connection release), inter-RAT mobility, and measurement configuration for UE measurement reporting; PDCP layer functionality associated with header compression/decompression, security (ciphering, deciphering, integrity protection, integrity verification), and handover support functions; RLC layer functionality associated with the transfer of upper layer PDUs, error correction through automatic repeat request (ARQ), concatenation, segmentation, and reassembly of RLC service data units (SDUs), re-segmentation of RLC data PDUs, and reordering of RLC data PDUs; and MAC layer functionality associated with mapping between logical channels and transport channels, scheduling information reporting, error correction, priority handling, and logical channel prioritization.

The transmitter 354 and the receiver 352 may implement Layer-1 (L1) functionality associated with various signal processing functions. Layer-1, which includes a physical (PHY) layer, may include error detection on the transport channels, forward error correction (FEC) coding/decoding of the transport channels, interleaving, rate matching, mapping onto physical channels, modulation/demodulation of physical channels, and MIMO antenna processing. The transmitter 354 handles mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols may then be split into parallel streams. Each stream may then be mapped to an orthogonal frequency division multiplexing (OFDM) subcarrier, multiplexed with a reference signal (e.g., pilot) in the time and/or frequency domain, and then combined together using an inverse fast Fourier transform (IFFT) to produce a physical channel carrying a time domain OFDM symbol stream. The OFDM symbol stream is spatially precoded to produce multiple spatial streams. Channel estimates from a channel estimator may be used to determine the coding and modulation scheme, as well as for spatial processing. The channel estimate may be derived from a reference signal and/or channel condition feedback transmitted by the UE 302. Each spatial stream may then be provided to one or more different antennas 356. The transmitter 354 may modulate an RF carrier with a respective spatial stream for transmission.

At the UE 302, the receiver 312 receives a signal through its respective antenna(s) 316. The receiver 312 recovers information modulated onto an RF carrier and provides the information to the one or more processors 332. The transmitter 314 and the receiver 312 implement Layer-1 functionality associated with various signal processing functions. The receiver 312 may perform spatial processing on the information to recover any spatial streams destined for the UE 302. If multiple spatial streams are destined for the UE 302, they may be combined by the receiver 312 into a single OFDM symbol stream. The receiver 312 then converts the OFDM symbol stream from the time-domain to the frequency domain using a fast Fourier transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the base station 304. These soft decisions may be based on channel estimates computed by a channel estimator. The soft decisions are then decoded and de-interleaved to recover the data and control signals that were originally transmitted by the base station 304 on the physical channel. The data and control signals are then provided to the one or more processors 332, which implements Layer-3 (L3) and Layer-2 (L2) functionality.

In the downlink, the one or more processors 332 provides demultiplexing between transport and logical channels, packet reassembly, deciphering, header decompression, and control signal processing to recover IP packets from the core network. The one or more processors 332 are also responsible for error detection.

Similar to the functionality described in connection with the downlink transmission by the base station 304, the one or more processors 332 provides RRC layer functionality associated with system information (e.g., MIB, SIBs) acquisition, RRC connections, and measurement reporting; PDCP layer functionality associated with header compression/decompression, and security (ciphering, deciphering, integrity protection, integrity verification); RLC layer functionality associated with the transfer of upper layer PDUs, error correction through ARQ, concatenation, segmentation, and reassembly of RLC SDUs, re-segmentation of RLC data PDUs, and reordering of RLC data PDUs; and MAC layer functionality associated with mapping between logical channels and transport channels, multiplexing of MAC SDUs onto transport blocks (TBs), demultiplexing of MAC SDUs from TBs, scheduling information reporting, error correction through hybrid automatic repeat request (HARQ), priority handling, and logical channel prioritization.

Channel estimates derived by the channel estimator from a reference signal or feedback transmitted by the base station 304 may be used by the transmitter 314 to select the appropriate coding and modulation schemes, and to facilitate spatial processing. The spatial streams generated by the transmitter 314 may be provided to different antenna(s) 316. The transmitter 314 may modulate an RF carrier with a respective spatial stream for transmission.

The uplink transmission is processed at the base station 304 in a manner similar to that described in connection with the receiver function at the UE 302. The receiver 352 receives a signal through its respective antenna(s) 356. The receiver 352 recovers information modulated onto an RF carrier and provides the information to the one or more processors 384.

In the uplink, the one or more processors 384 provides demultiplexing between transport and logical channels, packet reassembly, deciphering, header decompression, control signal processing to recover IP packets from the UE 302. IP packets from the one or more processors 384 may be provided to the core network. The one or more processors 384 are also responsible for error detection.

For convenience, the UE 302, the base station 304, and/or the network entity 306 are shown in FIGS. 3A, 3B, and 3C as including various components that may be configured according to the various examples described herein. It will be appreciated, however, that the illustrated components may have different functionality in different designs. In particular, various components in FIGS. 3A to 3C are optional in alternative configurations and the various aspects include configurations that may vary due to design choice, costs, use of the device, or other considerations. For example, in case of FIG. 3A, a particular implementation of UE 302 may omit the WWAN transceiver(s) 310 (e.g., a wearable device or tablet computer or PC or laptop may have Wi-Fi and/or Bluetooth capability without cellular capability), or may omit the short-range wireless transceiver(s) 320 (e.g., cellular-only, etc.), or may omit the satellite signal receiver 330, or may omit the sensor(s) 344, and so on. In another example, in case of FIG. 3B, a particular implementation of the base station 304 may omit the WWAN transceiver(s) 350 (e.g., a Wi-Fi "hotspot" access point without cellular capability), or may omit the short-range wireless transceiver(s) 360 (e.g., cellular-only, etc.), or may omit the satellite signal receiver 370, and so on. For brevity, illustration of the various alternative configurations is not provided herein, but would be readily understandable to one skilled in the art.

The various components of the UE 302, the base station 304, and the network entity 306 may be communicatively coupled to each other over data buses 334, 382, and 392, respectively. In an aspect, the data buses 334, 382, and 392 may form, or be part of, a communication interface of the UE 302, the base station 304, and the network entity 306, respectively. For example, where different logical entities are embodied in the same device (e.g., gNB and location server functionality incorporated into the same base station 304), the data buses 334, 382, and 392 may provide communication between them.

The components of FIGS. 3A, 3B, and 3C may be implemented in various ways. In some implementations, the components of FIGS. 3A, 3B, and 3C may be implemented in one or more circuits such as, for example, one or more processors and/or one or more ASICs (which may include one or more processors). Here, each circuit may use and/or incorporate at least one memory component for storing information or executable code used by the circuit to provide this functionality. For example, some or all of the functionality represented by blocks 310 to 346 may be implemented by processor and memory component(s) of the UE 302 (e.g., by execution of appropriate code and/or by appropriate configuration of processor components). Similarly, some or all of the functionality represented by blocks 350 to 388 may be implemented by processor and memory component(s) of the base station 304 (e.g., by execution of appropriate code and/or by appropriate configuration of processor components). Also, some or all of the functionality represented by blocks 390 to 398 may be implemented by processor and memory component(s) of the network entity 306 (e.g., by execution of appropriate code and/or by appropriate configuration of processor components). For simplicity, various operations, acts, and/or functions are described herein as being performed "by a UE," "by a base station," "by a network entity," etc. However, as will be appreciated, such operations, acts, and/or functions may actually be performed by specific components or combinations of components of the UE 302, base station 304, network entity 306, etc., such as the processors 332, 384, 394, the transceivers 310, 320, 350, and 360, the memories 340, 386, and 396, the positioning component 342, 388, and 398, etc.

In some designs, the network entity 306 may be implemented as a core network component. In other designs, the network entity 306 may be distinct from a network operator or operation of the cellular network infrastructure (e.g., NG RAN 220 and/or 5GC 210/260). For example, the network entity 306 may be a component of a private network that may be configured to communicate with the UE 302 via the base station 304 or independently from the base station 304 (e.g., over a non-cellular communication link, such as WiFi).

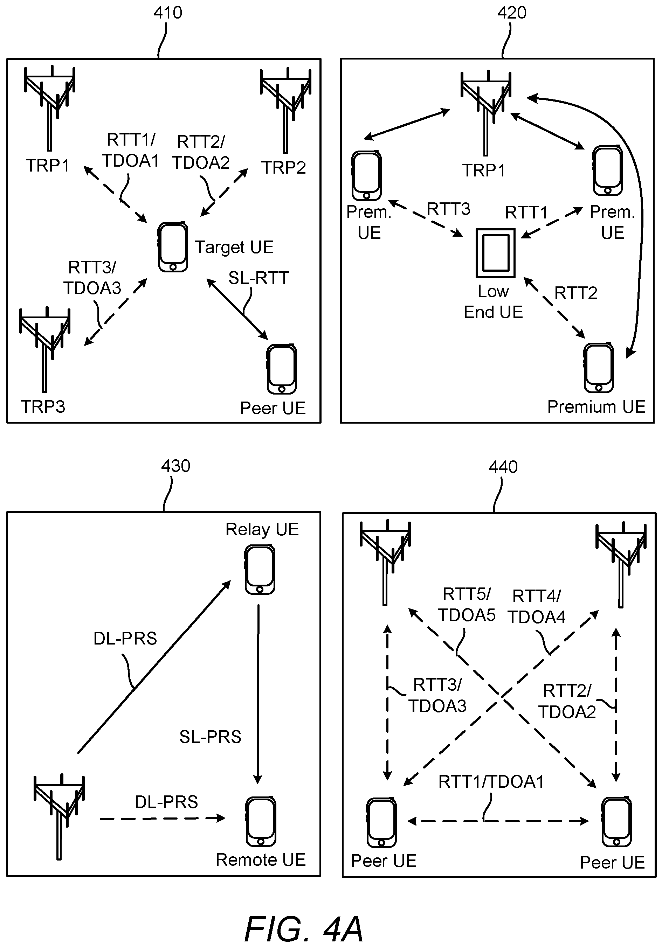

NR supports, or enables, various sidelink positioning techniques. FIG. 4A illustrates various scenarios of interest for sidelink-only or joint Uu and sidelink positioning, according to aspects of the disclosure. In scenario 410, at least one peer UE with a known location can improve the Uu-based positioning (e.g., multi-cell round-trip-time (RTT), downlink time difference of arrival (DL-TDOA), etc.) of a target UE by providing an additional anchor (e.g., using sidelink RTT (SL-RTT)). In scenario 420, a low-end (e.g., reduced capacity, or "RedCap") target UE may obtain the assistance of premium UEs to determine its location using, e.g., sidelink positioning and ranging procedures with the premium UEs. Compared to the low-end UE, the premium UEs may have more capabilities, such as more sensors, a faster processor, more memory, more antenna elements, higher transmit power capability, access to additional frequency bands, or any combination thereof. In scenario 430, a relay UE (e.g., with a known location) participates in the positioning estimation of a remote UE without performing uplink positioning reference signal (PRS) transmission over the Uu interface. Scenario 440 illustrates the joint positioning of multiple UEs. Specifically, in scenario 440, two UEs with unknown positions can be jointly located in non-line-of-sight (NLOS) conditions by utilizing constraints from nearby UEs.

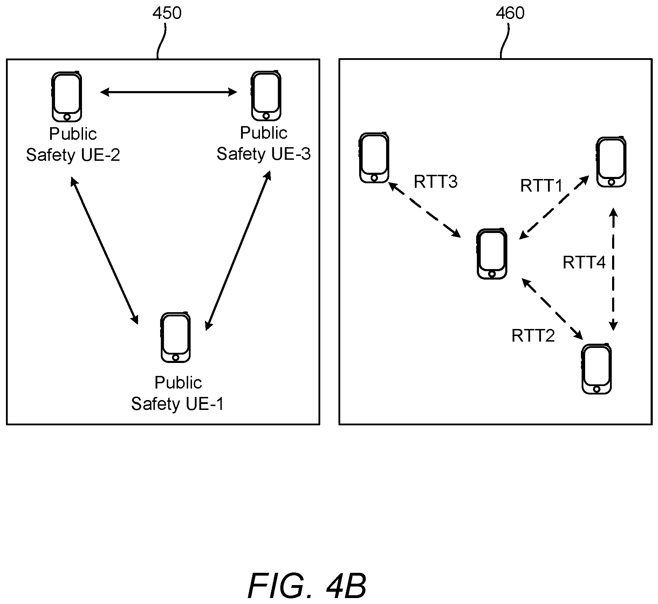

FIG. **4B** illustrates additional scenarios of interest for sidelink-only or joint Uu and sidelink positioning, according to aspects of the disclosure. In scenario 450, UEs used for public safety (e.g., by police, firefighters, and/or the like) may perform peer-to-peer (P2P) positioning and ranging for public safety and other uses. For example, in scenario 450, the public safety UEs may be out of coverage of a network and determine a location or a relative distance and a relative position among the public safety UEs using sidelink positioning techniques. Similarly, scenario 460 shows multiple UEs that are out of coverage and determine a location or a relative distance and a relative position using sidelink positioning techniques, such as SL-RTT.

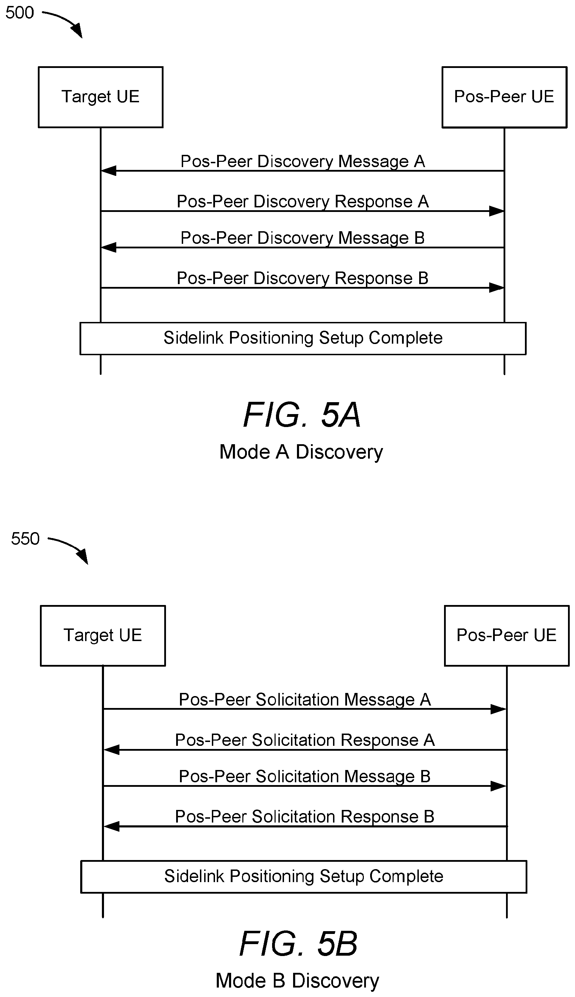

A UE that assists a target UE in a positioning procedure may be referred to as a "positioning peer" or "Pos-Peer" UE. Two types of Pos-Peer UE discovery procedures have been introduced for sidelink cooperative positioning, referred to as Mode A and Mode B. FIG. 5A illustrates an example call flow 500 for Mode A discovery, and FIG. 5B illustrates an example call flow 550 for Mode B discovery, according to aspects of the disclosure. The purpose of these discovery procedures is to discover which Pos-Peer UEs are in the vicinity of a target UE. In Mode A, a Pos-Peer UE may announce its presence by broadcasting a sidelink Pos-Peer discovery message with a positioning flag, as shown in FIG. 5A. In Mode B, a target UE that wants to discover Pos-Peer UEs may initiate by broadcasting a sidelink Pos-Peer solicitation message with field(s) related to positioning, as shown in FIG. 5B.

As shown in FIGS. 5A and 5B, both Pos-Peer discovery and solicitation messages can be split into two parts, labeled "A" and "B," to enable a more power efficient approach and a handshake between the target UE and the potential Pos-Peer UEs. A target UE can rank the potential Pos-Peer UEs (also referred to as anchor UEs) according to the following criteria: (1) location quality criterion, (2) channel quality criterion, (3) response time criterion, (4) mobility state criterion, or any combination thereof.

Even when there is no traffic being transmitted from the network to a UE, the UE is expected to monitor every downlink subframe on the physical downlink control channel (PDCCH). This means that the UE has to be "on," or active, all the time, even when there is no traffic, since the UE does not know exactly when the network will transmit data for it. However, being active all the time is a significant power drain for a UE.

To address this issue, a UE may implement discontinuous reception (DRX) and/or connected-mode discontinuous reception (CDRX) techniques. DRX and CDRX are mechanisms in which a UE goes into a "sleep" mode for a scheduled periods of time and "wakes up" for other periods of time. During the wake, or active, periods, the UE checks to see if there is any data coming from the network, and if there is not, goes back into sleep mode.

To implement DRX and CDRX, the UE and the network need to be synchronized. In a worst-case scenario, the network may attempt to send some data to the UE while the UE is in sleep mode, and the UE may wake up when there is no data to be received. To prevent such scenarios, the UE and the network should have a well-defined agreement about when the UE can be in sleep mode and when the UE should be awake/active. This agreement has been standardized in various technical specifications. Note that DRX includes CDRX, and thus, references to DRX refer to both DRX and CDRX, unless otherwise indicated.

The network (e.g., serving cell) can configure the UE with the DRX/CDRX timing using an RRC Connection Reconfiguration message (for CDRX) or an RRC Connection Setup message (for DRX). The network can signal the following DRX configuration parameters to the UE. (1) DRX Cycle: The duration of one 'ON time' plus one 'OFF time.' This value is not explicitly specified in RRC messages; rather, it is calculated by the subframe/slot time and "long DRX cycle start offset." (2) On-Duration Timer: The duration of 'ON time' within one DRX cycle. (3) DRX Inactivity Timer: How long a UE should remain 'ON' after the reception of a PDCCH. When this timer is on, the UE remains in the 'ON state,' which may extend the ON period into the period that would be the 'OFF' period otherwise. (4) DRX Retransmission Timer: The maximum number of consecutive PDCCH subframes/slots a UE should remain active to wait for an incoming retransmission after the first available retransmission time. (5) Short DRX Cycle: A DRX cycle that can be implemented within the 'OFF' period of a long DRX cycle. (6) DRX Short Cycle Timer: The consecutive number of subframes/slots that should follow the short DRX cycle after the DRX inactivity timer has expired.

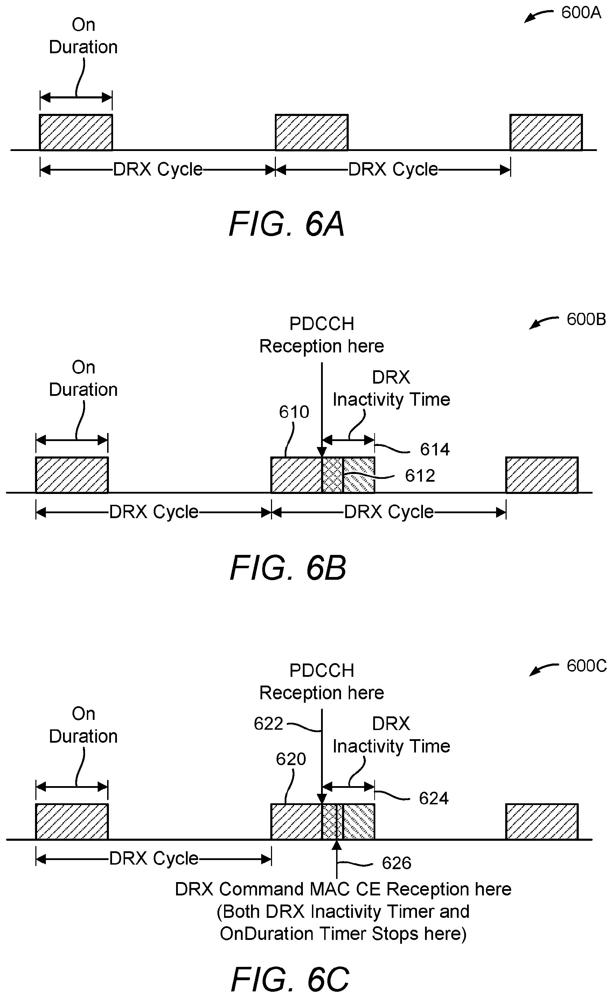

**FIGS. 6A to 6C** illustrate example DRX configurations, according to aspects of the disclosure. FIG. 6A illustrates an example DRX configuration 600A in which a long DRX cycle (the time from the start of one on-duration to the start of the next on-duration) is configured and no PDCCH is received during the cycle. FIG. 6B illustrates an example DRX configuration 600B in which a long DRX cycle is configured and a PDCCH is received during an on-duration 610 of the second DRX cycle illustrated. Note that the on-duration 610 ends at time 612. However, the time that the UE is awake/active (the "active time") is extended to time 614 based on the length of the DRX inactivity timer and the time at which the PDCCH is received. Specifically, when the PDCCH is received, the UE starts the DRX inactivity timer and stays in the active state until the expiration of that timer (which is reset each time a PDCCH is received during the active time).

FIG. 6C illustrates an example DRX configuration 600C in which a long DRX cycle is configured and a PDCCH and a DRX command MAC control element (MAC-CE) are received during an on-duration 620 of the second DRX cycle illustrated. Note that the active time beginning during on-duration 620 would normally end at time 624 due to the reception of the PDCCH at time 622 and the subsequent expiration of the DRX inactivity timer at time 624, as discussed above with reference to FIG. 6B. However, in the example of FIG. 6C, the active time is shortened to time 626 based on the time at which the DRX command MAC-CE, which instructs the UE to terminate the DRX inactivity timer and the on-duration timer, is received.

In greater detail, the active time of a DRX cycle is the time during which the UE is considered to be monitoring the PDCCH. The active time may include the time during which the on-duration timer is running, the DRX inactivity timer is running, the DRX retransmission timer is running, the MAC contention resolution timer is running, a scheduling request has been sent on the PUCCH and is pending, an uplink grant for a pending HARQ retransmission can occur and there is data in the corresponding HARQ buffer, or a PDCCH indicating a new transmission addressed to the cell radio network temporary identifier (C-RNTI) of the UE has not been received after successful reception of a random access response (RAR) for the preamble not selected by the UE. And, in non-contention-based random access, after receiving the RAR, the UE should be in an active state until the PDCCH indicating new transmission addressed to the C-RNTI of the UE is received.

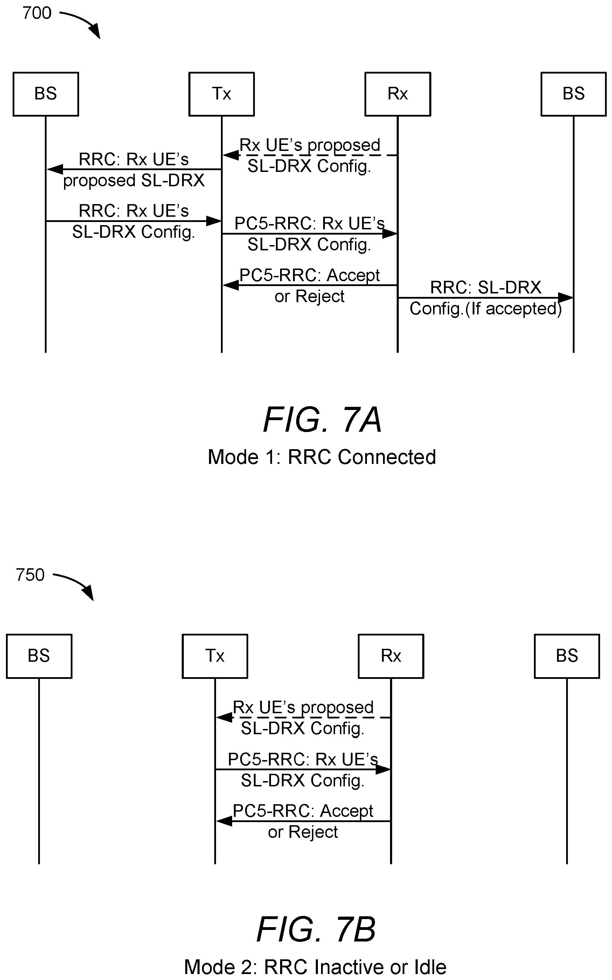

Within a sidelink communication session between a transmitter (Tx) UE and a receiver (Rx) UE, the Rx UE may utilize a sidelink DRX (SL-DRX) cycle. A SL-DRX configuration may be configured to a UE via unicast signaling or groupcast/broadcast signaling. If configured via unicast signaling, the parameters of the SL-DRX configuration can be negotiated between the Tx and Rx UEs. There are two modes for configuring the Rx UE with the SL-DRX configuration via unicast signaling, depending on whether the Tx and Rx UEs are in an RRC Connected state or an RRC Inactive or Idle state. FIG. 7A illustrates an example call flow 700 for a Mode 1 SL-DRX configuration and FIG. 7B illustrates an example call flow 750 for a Mode 2 SL-DRX configuration, according to aspects of the disclosure. In FIGS. 7A and 7B, communications between a UE and a base station is via RRC signaling, while communications between the UEs is via PC5-RRC signaling.

In Mode 1 SL-DRX configuration (FIG. 7A), the Tx and Rx UEs are in an RRC Connected state. As shown in call flow 700, the Rx UE optionally sends proposed SL-DRX configuration parameters to the Tx UE. The proposed SL-DRX configuration parameters may include the cycle length(s), offset(s), and on-duration(s) for the Rx UE's SL-DRX cycle(s). The Tx UE forwards the Rx UE's proposed SL-DRX configuration parameters to its serving base station (BS). The base station determines the SL DRX configuration for the Rx UE based on the proposed SL-DRX configuration parameters. The base station may align the SL-DRX cycle with the Tx UE's Uu DRX cycle. The Tx UE provides the SL-DRX configuration to the Rx UE, which either accepts or rejects the SL-DRX configuration. If the Rx UE accepts the SL-DRX configuration, the Rx UE reports the received SL-DRX configuration to its serving base station. If the Rx UE rejects the SL-DRX configuration, the Tx UE reports the rejection to its serving base station, which can determine and provide a different SL-DRX configuration.

In Mode 2 SL-DRX configuration (FIG. 7B), the Tx and Rx UEs are in an RRC Inactive or Idle state. As shown in call flow 750, the Rx UE optionally sends its desired/proposed SL-DRX configuration parameters to the Tx UE. The desired/proposed SL-DRX configuration parameters may include the cycle length(s), offset(s), and on-duration(s) for the Rx UE's SL-DRX cycle(s). Based on the received parameters, the Tx UE determines a SL-DRX configuration for the Rx UE. How the Tx UE determines the SL-DRX configuration for the Rx UE is up to UE implementation. Note that in Mode 2, the Tx and Rx UEs may be in-coverage (IC) or out-of-coverage (OOC).

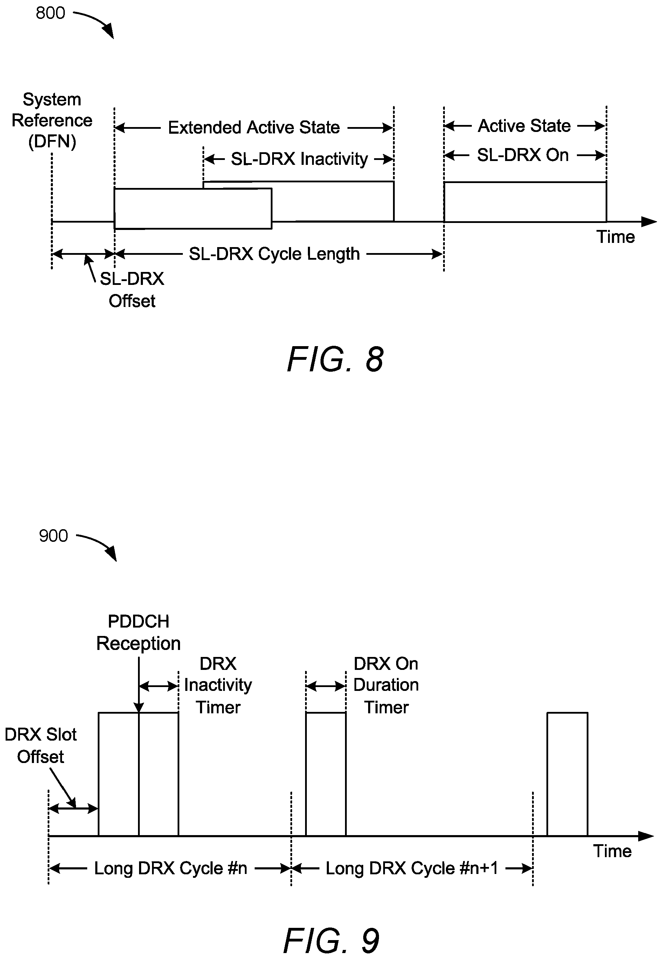

**FIG. 8** is a diagram 800 illustrating different SL-DRX parameters, according to aspects of the disclosure. As shown in FIG. 8, there is a SL-DRX offset from a system reference point (e.g., direct frame number (DFN)), an SL-DRX cycle length, an SL-DRX inactivity timer, and an SL-DRX on-duration timer. These parameters are similar to the Uu DRX parameters described above with reference to FIGS. 6A to 6C. Based on these parameters, the UE may be in an active state or an extended active state, as shown in FIG. 8.

Referring now to SL-DRX configuration via groupcast/broadcast signaling, in this case, the SL-DRX configuration is based on QoS profile(s) for an L2 destination identifier (ID) (i.e., a data link layer destination ID). Specifically, the SL-DRX cycle length is the minimum cycle length if there are multiple QoS profiles, the SL-DRX On time is the maximum on-duration if there are multiple QoS profiles, and the SL-DRX inactivity timer is the maximum inactivity time if there are multiple QoS profiles.

For a SL-DRX configuration based on an L2 destination ID, the SL-DRX offset parameter (given in milliseconds) is equal to the value of the L2 destination ID modulo the SL-DRX cycle length (given in milliseconds).

There are different ways to configure SL-DRX via groupcast or broadcast depending on whether the UEs are in-coverage (IC) or out-of-coverage (OOC). For in-coverage scenarios, whether the UE is in an RRC Connected state, an RRC Inactive state, or an RRC Idle state, the UE may obtain the SL-DRX configuration via a SIB12 on dedicated RRC. A SL-DRX configuration in the SIB 12 implicitly indicates that the broadcasting base station supports SL-DRX. For out-of-coverage scenarios, the SL-DRX configuration may be preconfigured to a UE and it is up to UE implementation to determine when to apply the SL-DRX configuration.

To assure backward compatibility for SL-DRX for groupcast and broadcast SL-DRX configurations, a UE can broadcast a Tx profile that indicates whether or not the UE supports SL-DRX for an L2 destination ID. A Tx UE only assumes SL-DRX for an RX UEs when the Tx profile broadcasted by the Rx UE indicates support of SL-DRX for an L2 destination ID. An Rx UE determines that SL-DRX is used if all service types / L2 destination IDs of interest have an associated Tx profile indicating support of SL-DRX. An Rx UE enables SL-DRX operation for an L2 destination ID with the associated Tx profile. For unicast SL-DRX configurations, for sidelink transmissions after a PC5-RRC connection is established, no backward compatibility issue for SL-DRX is assumed. That is, backward compatibility is handled based on PC5-RRC UE capability signaling.

**FIG. 9** is a diagram 900 illustrating various aspects of a long DRX cycle, according to aspects of the disclosure. In FIG. 9, each vertical box represents time during which the UE is in an active state. Once a long DRX cycle starts, the UE stays active for a duration of the DRX on-duration timer, and if there is no PDCCH received during this time, the UE transitions to DRX sleep state until the start of the next on-duration. However, if there was some PDCCH activity during the DRX on-duration period, it is highly likely that the UE may be scheduled again. If the UE transitions to DRX sleep state, it cannot receive the likely scheduling grants/assignments. As such, there is a timer to keep the UE in active state after being scheduled. This timer is referred to as the DRX inactivity timer and is configured by RRC signaling. A UE starts/restarts this timer every time a PDCCH indicates a new uplink or downlink transmission, and the UE stays in the active state and continues monitoring for a PDCCH until the expiry of the DRX inactivity timer, as shown in FIG. 9. The DRX inactivity timer can vary from 0 to 2560 ms.

SL-DRX "active time" of an Rx UE includes the time during which any of the SL-DRX timers are running (e.g., on-duration timer, inactivity timer, retransmission timer) or will be running in the future (e.g., on-duration timer, inactivity timer, retransmission timer). For SL-CSI reports, the active time includes the time between when the SL-CSI request is sent and the SL-CSI report is received, or the period of the parameter "sl-LatencyBound-CSI-Report." In addition, slots associated with the announced periodic transmissions by the Tx UE are considered as active time of the Rx UE.

Another aspect of sidelink positioning is the configuration of sidelink resource pools for positioning (RP-Ps). The 12 symbols between the first symbol of a sidelink slot (for automatic gain control (AGC)) and the last symbol (the gap) in the time domain and the allocated subchannel(s) in the frequency domain form a resource pool for sidelink transmission and/or reception. An RP-P can be configured within a resource pool specifically for positioning purposes. Each RP-P includes an offset, periodicity, number of consecutive symbols within a slot (e.g., as few as one symbol), and/or the bandwidth within a component carrier (or the bandwidth across multiple component carriers). In addition, each RP-P can be associated with a zone or a distance from a reference location.

A base station (or a UE, depending on the resource allocation mode) can assign, to another UE, one or more resource configurations from the RP-Ps. Additionally or alternatively, a UE (e.g., a relay or a remote UE) can request one or more RP-P configurations, and it can include in the request one or more of the following: (1) its location information (or zone identifier), (2) periodicity, (3) bandwidth, (4) offset, (5) number of symbols, and (6) whether a configuration with "low interference" is needed (which can be determined through an assigned QoS or priority).

A base station or a UE can configure/assign rate matching resources or RP-P for rate matching and/or muting to a sidelink UE such that when a collision exists between the assigned resources and another resource pool that contains data (PSSCH) and/or control (PSCCH), the sidelink UE is expected to rate match, mute, and/or puncture the data, DMRS, and/or CSI-RS within the colliding resources. This would enable orthogonalization between positioning and data transmissions for increased coverage of PRS signals.

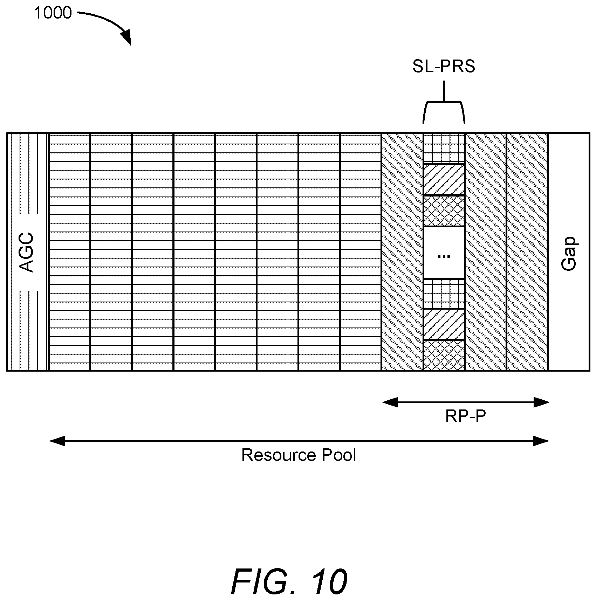

**FIG. 10** is a diagram 1000 illustrating an example of a resource pool for positioning within a sidelink resource pool, according to aspects of the disclosure. In the example of FIG. 10, time is represented horizontally and frequency is represented vertically. In the time domain, the length of each block is an orthogonal frequency division multiplexing (OFDM) symbol, and the 14 symbols make up a slot. In the frequency domain, the height of each block is a sub-channel.

In the example of FIG. 10, the entire slot (except for the first and last symbols) can be a resource pool for sidelink transmission and/or reception. That is, any of the symbols other than the first and last can be allocated for transmission and/or reception. However, an RP-P for sidelink positioning transmission/reception is allocated in the last four pre-gap symbols of the slot. As such, non-positioning sidelink data, such as user data, CSI-RS, and control information, can only be transmitted in the first eight post-AGC symbols and not in the last four pre-gap symbols to prevent a collision with the configured RP-P. The non-sidelink positioning data that would otherwise be transmitted in the last four pre-gap symbols can be punctured or muted, or the non-sidelink data that would normally span more than the eight post-AGC symbols can be rate matched to fit into the eight post-AGC symbols.

Sidelink positioning reference signals (SL-PRS) have been defined to enable sidelink positioning procedures among UEs. Like a downlink PRS (DL-PRS), an SL-PRS resource is composed of one or more resource elements (i.e., one OFDM symbol in the time domain and one subcarrier in the frequency domain). SL-PRS resources have been designed with a comb-based pattern to enable fast Fourier transform (FFT)-based processing at the receiver. SL-PRS resources are composed of unstaggered, or only partially staggered, resource elements in the frequency domain to provide small time of arrival (TOA) uncertainty and reduced overhead of each SL-PRS resource. SL-PRS may also be associated with specific RP-Ps (e.g., certain SL-PRS may be allocated in certain RP-Ps). SL-PRS have also been defined with intra-slot repetition (not shown in FIG. 10) to allow for combining gains (if needed). There may also be inter-UE coordination of RP-Ps to provide for dynamic SL-PRS and data multiplexing while minimizing SL-PRS collisions.

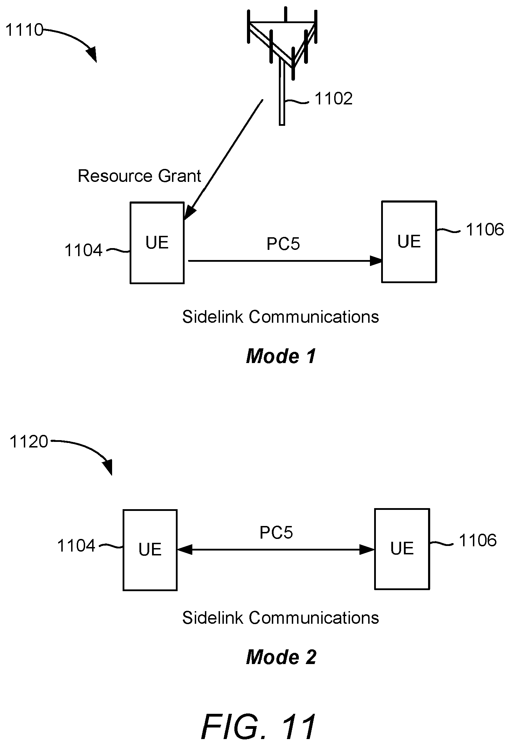

**FIG. 11** illustrates the two resource allocation modes for transmissions on NR sidelinks, according to aspects of the disclosure. In the first mode 1110 (labeled "Mode 1"), the base station 1102 (e.g., any of the base stations described herein) allocates time and/or frequency resources for sidelink communication between the UEs 1104 and 1106 via DCI 3_0. In this case, as an example, UE 1104 may be a Tx UE and UE 1106 may be an Rx UE.

In the second mode 1120 (labeled "Mode 2"), the involved UEs 1104 and 1106 autonomously select sidelink resources to use for sidelink communication. A UE can only use the first mode if it has cellular coverage, but can use the second mode regardless of whether or not it has cellular coverage. Note that although FIG. 11 illustrates two UEs, as will be appreciated, there may be more than the two UEs 1104 and 1106 illustrated.

Signaling over the sidelink is the same between the two resource allocation modes. From the point of view of the Rx UE (e.g., UE 1106), there is no difference between the modes. That is, it does not matter to the Rx UE whether the resources for sidelink communication were allocated by the base station 1102 or the Tx UE (e.g., UE 1104).

Mode 1 supports dynamic grant (DG), configured grant (CG) Type 1, and CG Type 2. In some cases, CG Type 1 is activated via RRC signaling from the base station 1102. In some cases, the modulation and coding scheme (MCS) for sidelink transmissions is determined by the involved UEs 1104 and 1106 within limits set by the base station 1102. In Mode 2, the Tx UE (e.g., UE 1104) performs channel sensing by blindly decoding all physical sidelink control channels (PSCCHs) to determine the resources reserved for other sidelink transmissions. The Tx UE reports available resources to its upper layer and the upper layer determines resource usage.

Regarding resource selection (e.g., which resource pool and/or which slots and/or subchannels of a resource pool) with respect to SL-DRX, a Tx UE is expected to select initial transmission resources from the resource pool only in an Rx UE's active time (i.e., where SL-DRX timers for the Rx UE are running currently or will be running in the future). That is, the Tx UE is expected to select initial resources (e.g., some set of symbols and/or slots within the resource pool) to transmit data to an Rx UE that coincide in the time domain with the Rx UE's active time. Since the Tx UE may receive multiple grants (e.g., from the location server, base station, or anchor UE) for SL-PRS transmission, for each such sidelink grant, the grant is used if the selected/granted resources coincide with the active time of at least one Rx UE, otherwise the grant is skipped. If there is no sidelink grant in the SL-DRX active time of a destination UE that has data to send (e.g., a Tx UE), resource reselection is triggered. For resource reselection due to preemption, the reselected resource(s) should not be earlier than the preempted resource(s) in the time domain.

For both a resource allocation Mode 1 DG and a Mode 2 grant, if the initial transmission occasion was dropped because there was no Rx UE in DRX active time, the Tx UE (e.g., UE 1104) can use a retransmission occasion for the initial transmission. For a Mode 1 sidelink grant that is not in the sidelink active time of any destination UE that has data to be sent, then if the initial transmission is dropped, the Tx UE sends an acknowledgment (ACK) to its serving base station (e.g., base station 1102). If a retransmission is dropped, however, the Tx UE sends a negative acknowledgment (NACK) to its base station. Accordingly, resource selection for data transmission is successful if the Tx UE finds at least one destination UE in active time of its DRX cycle.

In contrast to sidelink data communication, for a positioning session, a Tx UE needs to transmit to and receive SL-PRS from multiple SL UEs. In order to transmit to and receive SL-PRS from multiple UEs, an anchor UE, a base station, or the location server need to ensure that the selected resources (from an RP-P) for SL-PRS transmission are allocated within the DRX active time of the involved Rx and Tx UEs. Note that an anchor UE is the UE assigning/allocating/granting resources from an RP-P to the Rx and Tx UEs involved in a positioning session and optionally determining the location of the target UE. An anchor UE may or may not be connected to a base station. A Tx UE selects transmission resources from the RP-P allocated/granted by the location server, base station, or anchor UE, and transmits SL-PRS to one or more Rx UEs on the selected resources. An Rx UE measures the SL-PRS and transmits a response to the Tx UE. A UE may at times be an anchor UE, a Tx UE, or an Rx UE, depending on the operations it is performing. In addition, a UE may be both an anchor UE and a Tx UE or both an anchor UE and an Rx UE.

For sidelink data transmission use cases using groupcast signaling, the anchor UE (e.g., UE 1104) needs to ensure a resource grant is selected such that it is in the active time of at least one destination UE; otherwise, the grant is skipped. However, this approach will not work for positioning use cases, as the anchor UE or the location server need to obtain SL-PRS measurements from multiple UEs. For example, there may be some minimum number of UE measurements required to make the positioning fix.

It has been proposed to change/adjust the DRX parameters (and therefore the active time) of the recipient UEs to ensure that they are all aligned, thereby ensuring that they will all be in active time for a resource grant for positioning. In contrast, the present disclosure does not change a UE's SL-DRX parameters, but rather, adjusts the resource selection and reselection procedures to address the need to have a sufficient number of UEs transmit/measure SL-PRS for a positioning session.

At a high level, a Tx UE should select initial transmission resource(s) from a granted RP-P only if they occur inside the Rx UEs' active times, that is, where SL-DRX timers are running currently or will be running in the future (at least the on-duration timer). For each such sidelink resource grant, the grant is used if it is in the active time of at least "X" destination UEs (e.g., Rx UEs); otherwise the grant is skipped. The value of X may be (1) all of the UEs associated with this positioning session and are expected to be recipients of the SL-PRS, (2) a minimum number of UEs for the positioning session set by the location server, (3) a minimum number of UEs for the positioning session set by the anchor UE or a controller UE, (4) a minimum number of UEs for the positioning session set by the positioning session configuration, (5) a minimum number of UEs for the positioning session set by upper layers, or (6) related to the positioning method. For example, for option 6, a SL-RTT-only positioning procedure may require at least three Rx UEs, a SL-RTT/SL-AoA positioning procedure may require at least one Rx UE, and for a joint Uu/sidelink positioning procedure, the number of Rx UEs may depend on the number of Uu measurements.

There are different ways a Tx UE can ensure the initial transmission resource(s) occur inside the Rx UEs' active times. The first is referred to herein as "group resource selection mode." Consider the case that an anchor UE needs to conduct a sidelink positioning session with four other UEs (referred to as remote UEs). For resource selection from an RP-P, the anchor UE needs to ensure that all the selected resources for the positioning session are in the DRX on-duration time of the other UEs. If any of the selected resources do not satisfy this condition, the anchor UE needs to continue attempting resource selection (e.g., in different RP-Ps or subsequent RP-Ps). Resource selection will stop when the selected resource(s) satisfy the DRX active time conditions of the other UEs.

There should be a limit on the maximum number of attempts/retries for resource selection in the group resource selection mode. The maximum number of retries can be defined in the applicable wireless communications standard or provided by the location server, the anchor UE, the base station, the positioning session configuration, or upper layers. After the maximum number of retries, the UE should move to a sequential resource selection mode defined below.

The group resource selection mode is particularly useful for ranging and RTT-type positioning methods. For example, in the case of UE mobility, it is desirable to have measurements by the involved UEs being performed at roughly the same time.

In an aspect, instead of having the location server or anchor UE perform the DRX active time check for all the participating UEs, the location server or anchor UE may provide the set of UEs where this condition needs to meet. For example, for an anchor UE engaged in a positioning session with four remote UE's, the location server or the anchor UE can indicate that resource selection is successful if the selected resource(s) is in any two of the four UE's DRX active time.

Another way an anchor UE can ensure the initial transmission resource(s) occur inside the remote UEs' active times is referred to herein as "sequential resource selection mode." In this mode, the anchor UE will select the resource grant on a best effort basis. The anchor UE will continue sending the selected grant to different remote UEs in a sequential manner. The anchor UE needs to select different sets of destination IDs/UEs in a "round robin" manner to obtain measurements from all the involved UEs. The anchor UE will cease the resource selection process once a minimum number of destination IDs/UEs/SL-PRS resources are detected.

Since the anchor UE selects different sets of destination UEs and allocates them resources in a round robin manner, the anchor UE will need to select multiple sets of resources for the positioning session in different (e.g., sequential) time windows to obtain a single set of measurements from all the UEs. For example, the anchor UE may select a first set of remote UEs involved in a positioning session and allocate a first set of resources to them during a first time period, select a second set of remote UEs involved in the positioning session and allocate a second set of resources to them during a second (e.g., sequential) time period, and so on, until all involved UEs have been assigned resources to transmit and/or measure SL-PRS.

The sequential resource selection mode may be particularly useful for angle-based types of positioning methods, such as AoD-based methods.

In an aspect, the location server or base station should provide the mode of resource selection (e.g., either group resource selection or sequential resource selection) in Mode 1 resource allocation sidelink positioning sessions. In contrast, the anchor UE should provide the mode of resource selection in Mode 2 resource allocation sidelink positioning sessions.

In an aspect, for group resource selection mode, the location server or anchor UE should provide the count of the minimum number of attempts for resource selection. Similarly, the location server or anchor UE may need to provide the minimum set of destination IDs/UEs that need to be decoded in the gives slot/occasion.

In an aspect, the location server or anchor UE may configure separate resource selection windows for the group resource selection mode and the sequential resource selection mode. At each resource selection opportunity inside a resource selection window, the Tx UE should count the number of UEs that will be in active time for each potential resource, order the potential resources based on descending order of the number of UEs that will be in active time for that resource, and select a potential resource according to this order (e.g., select a potential resource that will have the most UEs in active time).

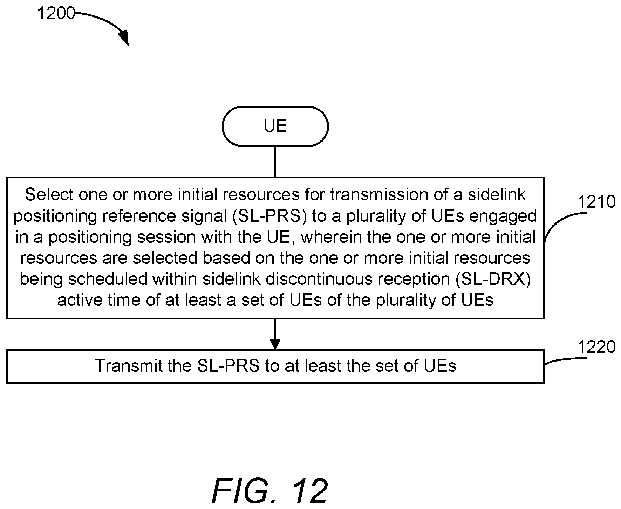

**FIG. 12** illustrates an example method 1200 of sidelink communication, according to aspects of the disclosure. In an aspect, method X00 may be performed by a UE (e.g., a Tx UE).

At 1210, the UE selects one or more initial resources for transmission of a SL-PRS to a plurality of UEs (e.g., Rx UEs) engaged in a positioning session with the UE, wherein the one or more initial resources are selected based on the one or more initial resources being scheduled within SL-DRX active time of at least a set of UEs of the plurality of UEs. In an aspect, operation 1210 may be performed by the one or more WWAN transceivers 310, the one or more short-range wireless transceivers 320, the one or more processors 332, memory 340, and/or positioning component 342, any or all of which may be considered means for performing this operation.

At 1220, the UE transmits the SL-PRS to at least the set of UEs. In an aspect, operation 1220 may be performed by the one or more WWAN transceivers 310, the one or more short-range wireless transceivers 320, the one or more processors 332, memory 340, and/or positioning component 342, any or all of which may be considered means for performing this operation.

As will be appreciated, a technical advantage of the method 1200 is increased positioning performance by increasing detectability of SL-PRS by Rx UEs in a positioning session, as the Rx UEs will be in a SL-DRX active state for reception of the SL-PRS.

In the detailed description above it can be seen that different features are grouped together in examples.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application.

The various illustrative logical blocks, modules, and circuits described in connection with the aspects disclosed herein may be implemented or performed with a general purpose processor, a digital signal processor (DSP), an ASIC, a field-programable gate array (FPGA), or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, for example, a combination of a DSP and a microprocessor, a plurality of microprocessors, one or more microprocessors in conjunction with a DSP core, or any other such configuration.

The methods, sequences and/or algorithms described in connection with the aspects disclosed herein may be embodied directly in hardware, in a software module executed by a processor, or in a combination of the two. A software module may reside in random access memory (RAM), flash memory, read-only memory (ROM), erasable programmable ROM (EPROM), electrically erasable programmable ROM (EEPROM), registers, hard disk, a removable disk, a CD-ROM, or any other form of storage medium known in the art. An example storage medium is coupled to the processor such that the processor can read information from, and write information to, the storage medium. In the alternative, the storage medium may be integral to the processor. The processor and the storage medium may reside in an ASIC. The ASIC may reside in a user terminal (e.g., UE). In the alternative, the processor and the storage medium may reside as discrete components in a user terminal.

In one or more example aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media.

While the foregoing disclosure shows illustrative aspects of the disclosure, it should be noted that various changes and modifications could be made herein without departing from the scope of the disclosure as defined by the appended claims. The functions, steps and/or actions of the method claims in accordance with the aspects of the disclosure described herein need not be performed in any particular order. Furthermore, although elements of the disclosure may be described or claimed in the singular, the plural is contemplated unless limitation to the singular is explicitly stated.

## Claims

1. A method (1200) of sidelink communication performed by a user equipment, UE, comprising:
selecting (1210) one or more initial resources for transmission of a sidelink positioning reference signal, SL-PRS, to a plurality of UEs engaged in a positioning session with the UE, wherein the one or more initial resources are selected based on the one or more initial resources being scheduled within sidelink discontinuous reception, SL-DRX, active time of at least a set of UEs of the plurality of UEs; and
transmitting (1220) the SL-PRS to at least the set of UEs.

2. A user equipment, UE, (302; 1104) comprising:
a memory (340);
at least one transceiver (310; 320); and
at least one processor (332) communicatively coupled to the memory and the at least one transceiver, the at least one processor configured to:
select one or more initial resources for transmission of a sidelink positioning reference signal, SL-PRS, to a plurality of UEs engaged in a positioning session with the UE, wherein the one or more initial resources are selected based on the one or more initial resources being scheduled within sidelink discontinuous reception, SL-DRX, active time of at least a set of UEs of the plurality of UEs; and
transmit, via the at least one transceiver, the SL-PRS to at least the set of UEs.

3. The method of claim 1 or the apparatus of claim 2, wherein a number of the set of UEs comprises:
all of the plurality of UEs,
a minimum number of UEs of the plurality of UEs set by a location server for the positioning session,
a minimum number of UEs of the plurality of UEs set by an anchor UE for the positioning session,
a minimum number of UEs of the plurality of UEs set by a configuration of the positioning session,
a minimum number of UEs of the plurality of UEs set by an upper layer of the UE,
a minimum number of UEs of the plurality of UEs for a type of the positioning session, or
a minimum number of UEs for the positioning session.

4. The method of claim 1 wherein selecting the one or more initial resources comprises:
determining, for each granted resource of one or more granted resources, whether the granted resource is scheduled within the SL-DRX active time of at least the set of UEs until the one or more initial resources are selected or a maximum number of selection attempts is satisfied wherein the maximum number of selection attempts is received from:
a location server for the positioning session,
an anchor UE for the positioning session,
a configuration of the positioning session, or
an upper layer of the UE
or the
apparatus of claim 2 further configured to:
determine, for each granted resource of one or more granted resources, whether the granted resource is scheduled within the SL-DRX active time of at least the set of UEs until the one or more initial resources are selected or a maximum number of selection attempts is satisfied wherein the maximum number of selection attempts is received from:
a location server for the positioning session,
an anchor UE for the positioning session,
a configuration of the positioning session, or
an upper layer of the UE.

5. The method of claim 1 wherein selecting the one or more initial resources comprises:
determining, for each granted resource of one or more granted resources, whether the granted resource is scheduled within the SL-DRX active time of at least the set of UEs until the one or more initial resources are selected or a maximum number of selection attempts is satisfied; and
performing sequential resource selection for subsets of the set of UEs based on the maximum number of selection attempts being satisfied or the apparatus of claim 2 further configured to:
determine, for each granted resource of one or more granted resources, whether the granted resource is scheduled within the SL-DRX active time of at least the set of UEs until the one or
more initial resources are selected or a maximum number of selection attempts is satisfied; and
perform sequential resource selection for subsets of the set of UEs based on the maximum number of selection attempts being satisfied.

6. The method of claim 1 further comprising:
receiving a first time window during which to perform group resource selection;
receiving a second time window during which to perform sequential resource selection; or
any combination thereof;
determining, for each resource selection opportunity inside a resource selection window, a number of UEs that will be in SL-DRX active time for each resource inside the resource selection window; and
selecting the one or more initial resources based on the one or more initial resources having the highest number of UEs that will be in SL-DRX active time or the apparatus of claim 2 further configured to:
receive a first time window during which to perform group resource selection;
receive a second time window during which to perform sequential resource selection; or
any combination thereof;
determine, for each resource selection opportunity inside a resource selection window, a number of UEs that will be in SL-DRX active time for each resource inside the resource selection window; and
select the one or more initial resources based on the one or more initial resources having the highest number of UEs that will be in SL-DRX active time.

7. The method of claim 1 further comprising:
receiving a number of the plurality of UEs from a location server for the positioning session or an anchor UE for the positioning session,
receiving a number of the set of UEs from the location server or the anchor UE, or
any combination thereof
or the apparatus of claim 2 further configured to:
receive a number of the plurality of UEs from a location server for the positioning session or an anchor UE for the positioning session,
receive a number of the set of UEs from the location server or the anchor UE,
or any combination thereof.

8. The method of claim 1 further comprising:
sequentially selecting one or more additional resources for transmission of additional SL-PRS to additional sets of the plurality of UEs other than the set of UEs until a minimum number of the plurality of UEs has been satisfied, wherein the one or more additional resources are selected based on the one or more additional resources being scheduled within SL-DRX active time of the additional sets of the plurality of UEs; and
transmitting the additional SL-PRS to the additional sets of the plurality of UEs
or the apparatus of claim 2 further configured to:
sequentially select one or more additional resources for transmission of additional SL-PRS to additional sets of the plurality of UEs other than the set of UEs until a minimum number of the plurality of UEs has been satisfied, wherein the one or more additional resources are selected based on the one or more additional resources being scheduled within SL-DRX active time of the additional sets of the plurality of UEs; and
transmit the additional SL-PRS to the additional sets of the plurality of UEs.

9. The method of claim 1 further comprising:
receiving one or more resource grants for the positioning session, at least one of the one or more resource grants including at least the one or more initial resources; and
discarding resource grants of the one or more resource grants that do not include at least one transmission resource scheduled within the SL-DRX active time of at least the set of UEs
or the apparatus of claim 2 further configured to:
receive one or more resource grants for the positioning session, at least one of the one or more resource grants including at least the one or more initial resources; and to
discard resource grants of the one or more resource grants that do not include at least one transmission resource scheduled within the SL-DRX active time of at least the set of UEs.

10. The method of claim 1 further comprising
receiving a mode of resource selection from a location server or a base station based on resources for the positioning session being allocated by the location server or the base station; or
receiving the mode of resource selection from an anchor node based on the resources for the positioning session being allocated by the anchor node or the apparatus of claim 2 further configured to
receive a mode of resource selection from a location server or a base station based on resources for the positioning session being allocated by the location server or the base station; or receive the mode of resource selection from an anchor node based on the resources for the positioning session being allocated by the anchor node.

11. The method of claim 1 further comprising
receiving, from each UE of the set of UEs, a measurement of the SL-PRS, or the apparatus of claim 2 further configured to receive the measurement via the at least one transceiver.

12. The method of claim 1 further comprising
receiving SL-DRX configuration information for each of the plurality of UEs involved in the positioning session, or the apparatus of claim 2 further configured to receive the SL-DRX configuration information via the at least one transceiver.

13. The method or apparatus of claim 12, wherein the SL-DRX configuration information is received from:
the plurality of UEs,
a location server,
a base station, or
an anchor UE for the positioning session.

14. The method of claim 1 or the apparatus of claim 2, wherein the SL-DRX active time comprises:
time during which SL-DRX timers of the set of UEs are currently running or will be running.

15. A non-transitory computer-readable medium storing computer-executable instructions that, when executed by a user equipment, UE, cause the UE to carry out the method of any of claims 1 or 3 to 14.

## Patentansprüche

1. Verfahren (1200) zur Sidelink-Kommunikation, durchgeführt von einem UE (User Equipment), das Folgendes beinhaltet:
Auswählen (1210) einer oder mehrerer Anfangsressourcen zur Übertragung eines SL-PRS (Sidelink Positioning Reference Signal) zu mehreren an einer Ortungssitzung mit dem UE beteiligten UEs, wobei die ein oder mehreren Anfangsressourcen auf der Basis ausgewählt werden, dass die ein oder mehreren Anfangsressourcen innerhalb einer aktiven SL-DRX-(Sidelink Discontinuous Reception)-Zeit von mindestens einem Satz von UEs der mehreren UEs eingeplant werden; und
Übertragen (1220) des SL-PRS zu mindestens dem Satz von UEs.

2. UE (User Equipment) (302; 1104), das Folgendes umfasst:
einen Speicher (340);
mindestens einen Transceiver (310; 320); und
mindestens einen Prozessor (332), der mit dem Speicher und dem mindestens einen Transceiver kommunikativ gekoppelt ist, wobei der mindestens eine Prozessor konfiguriert ist zum:
Auswählen einer oder mehrerer Anfangsressourcen zur Übertragung eines SL-PRS (Sidelink Positioning Reference Signal) zu mehreren an einer Ortungssitzung mit dem UE beteiligten UEs, wobei die ein oder mehreren Anfangsressourcen auf der Basis ausgewählt werden, dass die ein oder mehreren Anfangsressourcen innerhalb einer aktiven SL-DRX-(Sidelink Discontinuous Reception)-Zeit von mindestens einem Satz von UEs der mehreren UEs eingeplant werden; und
Übertragen, über den mindestens einen Transceiver, des SL-PRS zu mindestens dem Satz von UEs.

3. Verfahren nach Anspruch 1 oder Vorrichtung nach Anspruch 2, wobei eine Anzahl des Satz von UEs Folgendes umfasst:
alle der mehreren UEs,
eine Mindestanzahl von UEs der mehreren von einem Standortserver für die Ortungssitzung festgelegten UEs,
eine Mindestanzahl von UEs der mehreren von einem Anker-UE für die Ortungssitzung festgelegten UEs,
eine Mindestanzahl von UEs der mehreren durch eine Konfiguration der Ortungssitzung festgelegten UEs,
eine Mindestanzahl von UEs der mehreren durch eine obere Schicht der Ortungssitzung festgelegten UEs,
eine Mindestanzahl von UEs der mehreren UEs für einen Typ der Ortungssitzung, oder
eine Mindestanzahl von UEs für die Ortungssitzung.

4. Verfahren nach Anspruch 1, wobei das Auswählen der ein oder mehreren Anfangsressourcen Folgendes beinhaltet:
Feststellen, für jede zugeteilte Ressource von einer oder mehreren zugeteilten Ressourcen, ob die zugeteilte Ressource innerhalb der aktiven SL-DRX-Zeit von mindestens dem Satz von UEs eingeplant ist, bis die ein oder mehreren Anfangsressourcen ausgewählt sind oder eine maximale Anzahl von Auswahlversuchen erreicht ist, wobei die maximale Anzahl von Auswahlversuchen empfangen wird von:
einem Standortserver für die Ortungssitzung,
einem Anker-UE für die Ortungssitzung,
einer Konfiguration der Ortungssitzung oder
einer höheren Schicht des UE,
oder Vorrichtung nach Anspruch 2, ferner konfiguriert zum:
Feststellen, für jede zugeteilte Ressource von einer oder mehreren zugeteilten Ressourcen, ob die zugeteilte Ressource innerhalb der aktiven SL-DRX-Zeit von zumindest dem Satz von UEs eingeplant ist, bis die ein oder mehreren Anfangsressourcen ausgewählt sind oder eine maximale Anzahl von Auswahlversuchen erreicht ist, wobei die maximale Anzahl von Auswahlversuchen empfangen wird von:
einem Standortserver für die Ortungssitzung,
einem Anker-UE für die Ortungssitzung,
einer Konfiguration der Ortungssitzung oder
einer höheren Schicht des UE.

5. Verfahren nach Anspruch 1, wobei das Auswählen der ein oder mehreren Anfangsressourcen Folgendes beinhaltet:
Feststellen, für jede zugeteilte Ressource von einer oder mehreren zugeteilten Ressourcen, ob die zugeteilte Ressource innerhalb der aktiven SL-DRX-Zeit von zumindest dem Satz von UEs eingeplant ist, bis die ein oder mehreren Anfangsressourcen ausgewählt sind oder eine maximale Anzahl von Auswahlversuchen erreicht ist; und
Durchführen einer sequenziellen Ressourcenauswahl für Teilsätze des Satzes von UEs auf der Basis, dass die maximale Anzahl von Auswahlversuchen erreicht ist,
oder Vorrichtung nach Anspruch 2, ferner konfiguriert zum:
Feststellen, für jede zugeteilte Ressource von einer oder mehreren zugeteilten Ressourcen, ob die zugeteilte Ressource innerhalb der aktiven SL-DRX-Zeit von zumindest dem Satz von UEs eingeplant ist, bis die ein oder mehreren Anfangsressourcen ausgewählt sind oder eine maximale Anzahl von Auswahlversuchen erreicht ist; und
Durchführen einer sequenziellen Ressourcenauswahl für Teilsätze des Satzes von UEs auf der Basis, dass die maximale Anzahl von Auswahlversuchen erreicht ist.

6. Verfahren nach Anspruch 1, das ferner Folgendes beinhaltet:
Empfangen eines ersten Zeitfensters, in dem eine Gruppenressourcenauswahl durchgeführt werden soll;
Empfangen eines zweiten Zeitfensters, in dem eine sequenzielle Ressourcenauswahl durchgeführt werden soll; oder
eine beliebige Kombination davon;
Bestimmen, für jede Ressourcenauswahlgelegenheit innerhalb eines Ressourcenauswahlfensters, einer Anzahl von UEs, die sich für jede Ressource innerhalb des Ressourcenauswahlfensters in der aktiven SL-DRX-Zeit befinden werden; und
Auswählen der ein oder mehrerer Anfangsressourcen auf der Basis der ein oder mehreren Anfangsressourcen mit der höchsten Anzahl von UEs, die sich in der aktiven SL-DRX-Zeit befinden werden,
oder Vorrichtung nach Anspruch 2, ferner konfiguriert zum:
Empfangen eines ersten Zeitfensters, in dem eine Gruppenressourcenauswahl durchgeführt werden soll;
Empfangen eines zweiten Zeitfensters, in dem eine sequenzielle Ressourcenauswahl durchgeführt werden soll; oder
eine beliebige Kombination davon;
Bestimmen, für jede Ressourcenauswahlgelegenheit innerhalb eines Ressourcenauswahlfensters, einer Anzahl von UEs, die sich für jede Ressource innerhalb des Ressourcenauswahlfensters in der aktiven SL-DRX-Zeit befinden werden; und
Auswählen der ein oder mehreren Anfangsressourcen auf der Basis der ein oder mehreren Anfangsressourcen mit der höchsten Anzahl von UEs, die sich in der aktiven SL-DRX-Zeit befinden werden.

7. Verfahren nach Anspruch 1, das ferner Folgendes beinhaltet:
Empfangen einer Anzahl der mehreren UEs von einem Standortserver für die Ortungssitzung oder einem Anker-UE für die Ortungssitzung;
Empfangen einer Anzahl des Satzes von UEs vom Standortserver oder dem Anker-UE, oder
eine beliebige Kombination davon,
oder Vorrichtung nach Anspruch 2, ferner konfiguriert zum:
Empfangen einer Anzahl der mehreren UEs von einem Standortserver für die Ortungssitzung oder einem Anker-UE für die Ortungssitzung,
Empfangen einer Anzahl des Satzes von UEs vom Standortserver oder dem Anker-UE,
oder eine beliebige Kombination davon.

8. Verfahren nach Anspruch 1, das ferner Folgendes beinhaltet:
sequentielles Auswählen einer oder mehrerer zusätzlicher Ressourcen zur Übertragung zusätzlicher SL-PRS zu zusätzlichen Sätzen der mehreren UEs außer dem Satz von UEs, bis eine Mindestanzahl der mehreren UEs erreicht ist, wobei die ein oder mehreren zusätzlichen Ressourcen auf der Basis ausgewählt werden, dass die ein oder mehreren zusätzlichen Ressourcen innerhalb der aktiven SL-DRX-Zeit der zusätzlichen Sätze der mehreren UEs eingeplant werden; und
Übertragen der zusätzlichen SL-PRS zu den zusätzlichen Sätzen der mehreren UEs,
oder Vorrichtung nach Anspruch 2, ferner konfiguriert zum:
sequenziellen Auswählen einer oder mehrerer zusätzlicher Ressourcen für die Übertragung zusätzlicher SL-PRS zu zusätzlichen Sätzen der mehreren UEs außer dem Satz von UEs, bis eine Mindestanzahl der mehreren UEs erreicht ist, wobei die ein oder mehreren zusätzlichen Ressourcen auf der Basis ausgewählt werden, dass die ein oder mehreren zusätzlichen Ressourcen innerhalb der aktiven SL-DRX-Zeit der zusätzlichen Sätze der mehreren UEs eingeplant werden; und
Übertragen der zusätzlichen SL-PRS zu den zusätzlichen Sätzen der mehreren UEs.

9. Verfahren nach Anspruch 1, das ferner Folgendes beinhaltet:
Empfangen einer oder mehrerer Ressourcenzuteilungen für die Ortungssitzung, wobei mindestens eine der ein oder mehreren Ressourcenzuteilungen mindestens die ein oder mehreren Anfangsressourcen enthält; und
Verwerfen von Ressourcenzuteilungen der ein oder mehreren Ressourcenzuteilungen, die nicht mindestens eine Übertragungsressource enthalten, die innerhalb der aktiven SL-DRX-Zeit von mindestens dem Satz von UEs eingeplant ist,
oder Vorrichtung nach Anspruch 2, ferner konfiguriert zum:
Empfangen einer oder mehrerer Ressourcenzuteilungen für die Ortungssitzung, wobei mindestens eine der ein oder mehreren Ressourcenzuteilungen mindestens die ein oder mehreren Anfangsressourcen umfasst; und
Verwerfen von Ressourcenzuteilungen der ein oder mehreren Ressourcenzuteilungen, die nicht mindestens eine Übertragungsressource enthalten, die innerhalb der aktiven SL-DRX-Zeit von mindestens dem Satz von UEs eingeplant ist.

10. Verfahren nach Anspruch 1, das ferner Folgendes beinhaltet:
Empfangen eines Ressourcenauswahlmodus von einem Standortserver oder einer Basisstation auf der Basis von Ressourcen für die Ortungssitzung, die vom Standortserver oder von der Basisstation zugewiesen werden; oder
Empfangen des Ressourcenauswahlmodus von einem Ankerknoten auf der Basis der Ressourcen für die von dem Ankerknoten zugewiesene Ortungssitzung,
oder Vorrichtung nach Anspruch 2, ferner konfiguriert zum:
Empfangen eines Ressourcenauswahlmodus von einem Standortserver oder einer Basisstation auf der Basis von Ressourcen für die Ortungssitzung, die vom Standortserver oder von der Basisstation zugewiesen werden; oder
Empfangen des Ressourcenauswahlmodus von einem Ankerknoten auf der Basis der Ressourcen für die Ortungssitzung, die von dem Ankerknoten zugewiesen werden.

11. Verfahren nach Anspruch 1, das ferner Folgendes beinhaltet:
Empfangen eines Messwerts des SL-PRS von jedem UE des Satzes von UEs,
oder Vorrichtung nach Anspruch 2, ferner konfiguriert zum Empfangen des Messwerts über den mindestens einen Transceiver.

12. Verfahren nach Anspruch 1, das ferner Folgendes beinhaltet:
Empfangen von SL-DRX-Konfigurationsinformationen für jedes der mehreren an der Ortungssitzung beteiligten UEs, oder Vorrichtung nach Anspruch 2, ferner konfiguriert zum Empfangen der SL-DRX-Konfigurationsinformationen über den mindestens einen Transceiver.

13. Verfahren oder Vorrichtung nach Anspruch 12, wobei die SL-DRX-Konfigurationsinformationen empfangen werden von:
den mehreren UEs,
einem Standortserver,
einer Basisstation oder
einem Anker-UE für die Ortungssitzung.

14. Verfahren nach Anspruch 1 oder Vorrichtung nach Anspruch 2, wobei die aktive SL-DRX-Zeit Folgendes umfasst:
die Zeit, in der SL-DRX-Timer des Satzes von UEs aktuell laufen oder laufen werden.

15. Nichtflüchtiges, computerlesbares Medium, das computerausführbare Befehle speichert, die bei Ausführung durch ein UE (User Equipment) bewirken, dass das UE das Verfahren nach einem der Ansprüche 1 oder 3 bis 14 durchführt.

## Revendications

1. Procédé (1200) de communication en liaison latérale effectué par un équipement utilisateur, EU, comprenant :
sélectionner (1210) une ou plusieurs ressources initiales pour la transmission d'un signal de référence de positionnement de liaison latérale, SL-PRS, à une pluralité d'EU engagés dans une session de positionnement avec l'EU, dans lequel l'une ou plusieurs ressources initiales sont sélectionnées sur la base d'une ou plusieurs ressources initiales étant planifiées pendant une période active de réception discontinue en liaison latérale, SL-DRX, d'au moins un ensemble d'EU de la pluralité d'EU ; et
transmettre (1220) le SL-PRS à au moins l'ensemble d'EU.

2. Equipement utilisateur, EU, (302, 1104) comprenant :
une mémoire (340) ;
au moins un émetteur-récepteur (310, 320) ; et
au moins un processeur (332) couplé de manière communicative à la mémoire et au moins au un émetteur-récepteur, le au moins un processeur étant configuré pour :
sélectionner une ou plusieurs ressources initiales pour la transmission d'un signal de référence de positionnement de liaison latérale, SL-PRS, à une pluralité d'EU engagés dans une session de positionnement avec l'EU, dans lequel l'une ou plusieurs ressources initiales sont sélectionnées sur la base de l'une ou plusieurs ressources initiales étant planifiées pendant une période active de réception discontinue en liaison latérale, SL-DRX, d'au moins un ensemble d'EU de la pluralité d'EU ; et
transmettre, par le au moins un émetteur-récepteur, le SL-PRS au moins au un ensemble d'EU.

3. Procédé selon la revendication 1 ou appareil selon la revendication 2, dans lesquels un nombre de l'ensemble d'EU comprend :
toute la pluralité d'EU,
un nombre minimal d'EU de la pluralité d'EU établis par un serveur de localisation pour la session de positionnement,
un nombre minimal d'EU de la pluralité d'EU établis par un EU d'ancrage pour la session de positionnement,
un nombre minimal d'EU de la pluralité d'EU établis par une configuration de la session de positionnement,
un nombre minimal d'EU de la pluralité d'EU établis par une couche supérieure de l'EU,
un nombre minimal d'EU de la pluralité d'EU pour un type de session de positionnement, ou
un nombre minimal d'EU pour la session de positionnement.

4. Procédé selon la revendication 1, dans lequel sélectionner l'une ou plusieurs ressources initiales comprend :
déterminer, pour chaque ressource accordée parmi une ou plusieurs ressources accordées, si la ressource accordée est planifiée pendant la période active SL-DRX d'au moins l'ensemble d'EU jusqu'à ce que l'une ou plusieurs ressources initiales soient sélectionnées ou qu'un nombre maximal de tentatives de sélection soit satisfait, dans lequel le nombre maximal de tentatives de sélection est reçu :
d'un serveur de localisation pour la session de positionnement,
d'un EU d'ancrage pour la session de positionnement,
d'une configuration de la session de positionnement, ou
d'une couche supérieure de l'EU,
ou bien l'appareil selon la revendication 2 étant configuré en outre pour :
déterminer, pour chaque ressource accordée parmi une ou plusieurs ressources accordées, si la ressource accordée est planifiée pendant la période active SL-DRX d'au moins l'ensemble d'EU jusqu'à ce que l'une ou plusieurs ressources initiales soient sélectionnées ou qu'un nombre maximal de tentatives de sélection soit satisfait, dans lequel le nombre maximal de tentatives de sélection est reçu :
d'un serveur de localisation pour la session de positionnement,
d'un EU d'ancrage pour la session de positionnement,
d'une configuration de la session de positionnement, ou
d'une couche supérieure de l'EU.

5. Procédé selon la revendication 1, dans lequel sélectionner l'une ou plusieurs ressources initiales comprend :
déterminer, pour chaque ressource accordée parmi une ou plusieurs ressources accordées, si la ressource accordée est planifiée pendant la période active SL-DRX d'au moins l'ensemble d'EU jusqu'à ce que l'une ou plusieurs ressources initiales soient sélectionnées ou qu'un nombre maximal de tentatives de sélection soit satisfait ; et
effectuer une sélection séquentielle de ressources pour des sous-ensembles de l'ensemble d'EU sur la base du nombre maximal de tentatives de sélection étant satisfait, ou bien l'appareil selon la revendication 2 étant configuré en outre pour :
déterminer, pour chaque ressource accordée parmi une ou plusieurs ressources accordées, si la ressource accordée est planifiée pendant la période active SL-DRX d'au moins l'ensemble d'EU jusqu'à ce que l'une ou plusieurs ressources initiales soient sélectionnées ou qu'un nombre maximal de tentatives de sélection soit satisfait ; et
effectuer une sélection séquentielle de ressources pour des sous-ensembles de l'ensemble d'EU sur la base du nombre maximal de tentatives de sélection étant satisfait.

6. Procédé selon la revendication 1, comprenant en outre :
recevoir une première fenêtre temporelle durant laquelle effectuer une sélection de ressources de groupe,
recevoir une deuxième fenêtre temporelle durant laquelle effectuer une sélection séquentielle de ressources ; ou
une combinaison quelconque des mêmes ;
déterminer, pour chaque opportunité de sélection de ressources à l'intérieur d'une fenêtre de sélection de ressources, un nombre d'EU qui seront dans la période active SL-DRX pour chaque ressource dans la fenêtre de sélection de ressources ; et
sélectionner l'une ou plusieurs ressources initiales sur la base de l'une ou plusieurs ressources initiales ayant le nombre d'EU le plus élevé qui seront dans la période active SL-DRX, ou bien l'appareil selon la revendication 2 étant configuré en outre pour :
recevoir une première fenêtre temporelle durant laquelle effectuer une sélection de ressources de groupe,
recevoir une deuxième fenêtre temporelle durant laquelle effectuer une sélection séquentielle de ressources ; ou
une combinaison quelconque des mêmes ;
déterminer, pour chaque opportunité de sélection de ressources à l'intérieur d'une fenêtre de sélection de ressources, un nombre d'EU qui seront dans la période active SL-DRX pour chaque ressource dans la fenêtre de sélection de ressources ; et
sélectionner l'une ou plusieurs ressources initiales sur la base de l'une ou plusieurs ressources initiales ayant le nombre d'EU le plus élevé qui seront dans la période active SL-DRX.

7. Procédé selon la revendication 1, comprenant en outre :
recevoir un nombre de la pluralité d'EU d'un serveur de localisation pour la session de positionnement ou un EU d'ancrage pour la session de positionnement,
recevoir un nombre de l'ensemble d'EU du serveur de localisation ou l'EU d'ancrage, ou
une combinaison quelconque des mêmes, ou bien l'appareil selon la revendication 2 étant configuré en outre pour :
recevoir un nombre de la pluralité d'EU d'un serveur de localisation pour la session de positionnement ou un EU d'ancrage pour la session de positionnement,
recevoir un nombre de l'ensemble d'EU du serveur de localisation ou l'EU d'ancrage,
ou une combinaison quelconque des mêmes.

8. Procédé selon la revendication 1, comprenant en outre :
sélectionner séquentiellement une ou plusieurs ressources supplémentaires pour transmission d'un SL-PRS supplémentaire à des ensembles supplémentaires de la pluralité d'EU autres que l'ensemble d'EU jusqu'à ce qu'un nombre minimal de la pluralité d'EU soit satisfait, dans lequel l'une ou plusieurs ressources supplémentaires sont sélectionnées sur la base de l'une ou plusieurs ressources supplémentaires étant planifiées pendant la période active SL-DRX des ensembles supplémentaires de la pluralité d'EU ; et
transmettre le SL-PRS supplémentaire aux ensembles supplémentaires de la pluralité d'EU, ou bien l'appareil selon la revendication 2 étant configuré en outre pour :
sélectionner séquentiellement une ou plusieurs ressources supplémentaires pour transmission d'un SL-PRS supplémentaire à des ensembles supplémentaires de la pluralité d'EU autres que l'ensemble d'EU jusqu'à ce qu'un nombre minimal de la pluralité d'EU soit satisfait, dans lequel l'une ou plusieurs ressources supplémentaires sont sélectionnées sur la base de l'une ou plusieurs ressources supplémentaires étant planifiées pendant la période active SL-DRX des ensembles supplémentaires de la pluralité d'EU ; et
transmettre le SL-PRS supplémentaire aux ensembles supplémentaires de la pluralité d'EU.

9. Procédé selon la revendication 1, comprenant en outre :
recevoir une ou plusieurs allocations de ressources pour la session de positionnement, au moins l'une de l'une ou plusieurs allocations de ressources comprenant au moins l'une ou plusieurs ressources initiales ; et
ignorer des allocations de ressources parmi l'une ou plusieurs allocations de ressources qui ne comprennent pas au moins une ressource de transmission planifiée pendant la période active SL-DRX d'au moins l'ensemble d'EU, ou bien l'appareil selon la revendication 2 étant configuré en outre pour :
recevoir une ou plusieurs allocations de ressources pour la session de positionnement, au moins l'une de l'une ou plusieurs allocations de ressources comprenant au moins l'une ou plusieurs ressources initiales ; et
ignorer des allocations de ressources parmi l'une ou plusieurs allocations de ressources qui ne comprennent pas au moins une ressource de transmission planifiée pendant la période active SL-DRX d'au moins l'ensemble d'EU.

10. Procédé selon la revendication 1, comprenant en outre :
recevoir un mode de sélection de ressources d'un serveur de localisation ou d'une station de base sur la base de ressources pour la session de positionnement étant allouées par le serveur de localisation ou la station de base ; ou
recevoir le mode de sélection de ressources d'un nœud d'ancrage sur la base des ressources pour la session de positionnement étant allouées par le nœud d'ancrage, ou bien l'appareil selon la revendication 2 étant configuré en outre pour :
recevoir un mode de sélection de ressources d'un serveur de localisation ou d'une station de base sur la base de ressources pour la session de positionnement étant allouées par le serveur de localisation ou la station de base ; ou
recevoir le mode de sélection de ressources d'un nœud d'ancrage sur la base des ressources pour la session de positionnement étant allouées par le nœud d'ancrage.

11. Procédé selon la revendication 1, comprenant en outre :
recevoir de chaque EU de l'ensemble d'EU, une mesure du SL-PRS, ou bien l'appareil selon la revendication 2 étant configuré en outre pour recevoir la mesure par le au moins un émetteur-récepteur.

12. Procédé selon la revendication 1, comprenant en outre :
recevoir des informations de configuration SL-DRX pour chacun de la pluralité d'EU impliqués dans la session de positionnement, ou bien l'appareil selon la revendication 2 étant configuré en outre pour recevoir les informations de configuration SL-DRX par le au moins un émetteur-récepteur.

13. Procédé ou appareil selon la revendication 12, dans lesquels les informations de configuration SL-DRX sont reçues :
de la pluralité d'EU,
d'un serveur de localisation,
d'une station de base, ou
d'un EU d'ancrage pour la session de positionnement.

14. Procédé selon la revendication 1 ou appareil selon la revendication 2, dans lesquels la période active SL-DRX comprend :
La période durant laquelle les horloges SL-DRX de l'ensemble d'EU fonctionnent actuellement ou fonctionneront.

15. Support non transitoire lisible par ordinateur stockant des instructions exécutables par ordinateur qui, lorsque exécutées par un équipement utilisateur, EU, font que l'EU met en œuvre le procédé selon l'une quelconque des revendications 1 ou 3 à 14.
